# EUROPEAN PATENT APPLICATION

(11) **EP 4 676 146 A1**
(43) Date of publication of application: **07.01.2026**
(21) Application number: 24763830.7
(22) Date of filing: 26.02.2024
(51) Int. Cl.: H04W 72/1268, H04W 16/28, H04W 72/232

(54) **TERMINAL, WIRELESS COMMUNICATION METHOD, AND BASE STATION**

(30) Priority: 27.02.2023 JP 2023028441
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2024/006757
(87) International publication number: WO 2024/181350

(57) **Abstract**

A terminal according to one aspect of the present disclosure includes: a receiving section that receives information related to a transmission mode when application or switching of a first transmission mode and a second transmission mode is supported; and a control section that judges a size of valid bits of each of the transmission modes in a given field of downlink control information (DCI) for scheduling UL transmission, based on a parameter corresponding to a sounding reference signal (SRS) resource set associated with the transmission mode.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In a future radio communication system, a UE can use one of multiple panels (or multiple beams) for uplink (UL) transmission. In Rel. 18 or later versions, for improvement of throughput/reliability of UL, it is studied to support simultaneous multi-panel transmission using multiple panels (Simultaneous Transmission across Multiple Panels (STxMP)) to one or more transmission/reception points (TRPs).

However, how to perform control when UL transmission using multiple panels (for example, simultaneous UL transmission) is supported is not studied sufficiently. Unless UL transmission using multiple panels is performed appropriately, degradation of system performance such as degradation of throughput may occur.

In view of this, an object of the present disclosure is to provide a terminal, a radio communication method, and a base station that enable appropriate control of UL transmission even when UL transmission is performed using multiple panels.

### Solution to Problem

A terminal according to one aspect of the present disclosure includes: a receiving section that receives information related to a transmission mode when application or switching of a first transmission mode and a second transmission mode is supported; and a control section that judges a size of valid bits of each of the transmission modes in a given field of downlink control information (DCI) for scheduling UL transmission, based on a parameter corresponding to a sounding reference signal (SRS) resource set associated with the transmission mode.

### Advantageous Effects of Invention

According to one aspect of the present disclosure, even when UL transmission is performed by using multiple panels, the UL transmission can be appropriately controlled.

### Brief Description of Drawings

[FIG. 1] FIG. 1 is a diagram to show an example of association between precoder types and TPMI indices.
[FIG. 2] FIG. 2A and FIG. 2B are diagrams to show examples of a single-panel UL transmission.
[FIG. 3] FIG. 3A to FIG. 3C are diagrams to show examples of schemes 1 to 3 of simultaneous UL transmission using multi-panel.
[FIG. 4] FIG. 4A to FIG. 4C are diagrams to show examples of a PUSCH transmission scheme.
[FIG. 5] FIG. 5A to FIG. 5C are diagrams to show other examples of the PUSCH transmission scheme.
[FIG. 6] FIG. 6 is a diagram to show an example of simultaneous UL transmission using multi-panel.
[FIG. 7] FIGS. 7A and 7B are diagrams to show examples of an SRI field of DCI according to a first embodiment.
[FIG. 8] FIG. 8A and FIG. 8B are diagrams to show other examples of the SRI field of the DCI according to the first embodiment.
[FIG. 9] FIG. 9A and 9B are diagrams to show examples of an SRI field of DCI according to a second embodiment.
[FIG. 10] FIG. 10A and 10B are diagrams to show other examples of the SRI field of the DCI according to the second embodiment.
[FIG. 11] FIG. 11A and 11B are diagrams to show examples of an SRI field of DCI according to a third embodiment.
[FIG. 12] FIG. 12A and FIG. 12B are diagrams to show other examples of the SRI field of the DCI according to the third embodiment.
[FIG. 13] FIG. 13 is a diagram to show examples of a given field (for example, an SRI field/TPMI field) of DCI according to a fourth embodiment.
[FIG. 14] FIG. 14 is a diagram to show examples of the given field (for example, the SRI field/TPMI field) of the DCI according to a fourth embodiment.
[FIG. 15] FIG. 15A and FIG. 15B are diagrams to show examples of BWP switching according to a fifth embodiment.
[FIG. 16] FIG. 16A and FIG. 16B are diagrams to show other examples of the BWP switching according to the fifth embodiment.
[FIG. 17] FIG. 17 is a diagram to show an example of a schematic structure of a radio communication system according to one embodiment.
[FIG. 18] FIG. 18 is a diagram to show an example of a structure of a base station according to one embodiment.
[FIG. 19] FIG. 19 is a diagram to show an example of a structure of a user terminal according to one embodiment.
[FIG. 20] FIG. 20 is a diagram to show an example of a hardware structure of the base station and the user terminal according to one embodiment.
[FIG. 21] FIG. 21 is a diagram to show an example of a vehicle according to one embodiment.

### Description of Embodiments

### (PUSCH Precoder)

In NR, it is studied that a UE supports at least one of codebook (CB) based transmission and a non-codebook (NCB) based transmission.

For example, it is studied that the UE judges a precoder (precoding matrix) for at least one of CB based and NCB based uplink shared channel (Physical Uplink Shared Channel (PUSCH)) transmissions by using at least a reference signal for a measurement (Sounding Reference Signal (SRS)) resource indicator (SRS Resource Indicator (SRI)).

In a case of CB based transmission, the UE may determine a precoder for the PUSCH transmission, based on an SRI, a transmitted rank indicator (TRI), a transmitted precoding matrix indicator (TPMI), and the like. In a case of NCB based transmission, the UE may determine a precoder for the PUSCH transmission, based on an SRI.

The UE may be notified of the SRI, the TRI, the TPMI, and the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH. The TRI and the TPMI may be specified by a precoding information and number of layers field ("Precoding information and number of layers" field) of the DCI.

The UE may report UE capability information related to a precoder type and be configured, by a base station, with the precoder type based on the UE capability information by higher layer signaling. The UE capability information may be precoder type information to be used by the UE in PUSCH transmission (which may be indicated by an RRC parameter "pusch-TransCoherence").

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. For example, the broadcast information may be master information blocks (MIBs), system information blocks (SIBs), and the like.

The UE may determine a precoder to be used for the PUSCH transmission, based on precoder type information (which may be indicated by an RRC parameter "codebookSubset") included in PUSCH configuration information notified by higher layer signaling ("PUSCH-Config" information element of RRC signaling). The UE may be configured with a subset of a PMI specified by the TPMI, by codebookSubset.

Note that the precoder type may be specified by any of or a combination of at least two of full coherent (fully coherent, coherent), partial coherent, and non-coherent (non coherent) (which may be indicated, for example, by a parameter such as "fullyAndPartialAndNonCoherent" or "partialAndNonCoherent."

Full coherent may mean that all the antenna ports to be used for transmission are synchronized (which may be expressed as being able to be matched in terms of phase, having the same precoder to be applied, and the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports the precoder type, full coherent, may be assumed to support the precoder types, partial coherent and non-coherent. A UE that supports the precoder type, partial coherent, may be assumed to support the precoder type, non-coherent.

The precoder type may be used interchangeably with coherency, PUSCH transmission coherence, a coherent type, a coherence type, a codebook type, a codebook subset, a codebook subset type, and the like.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB based transmission.

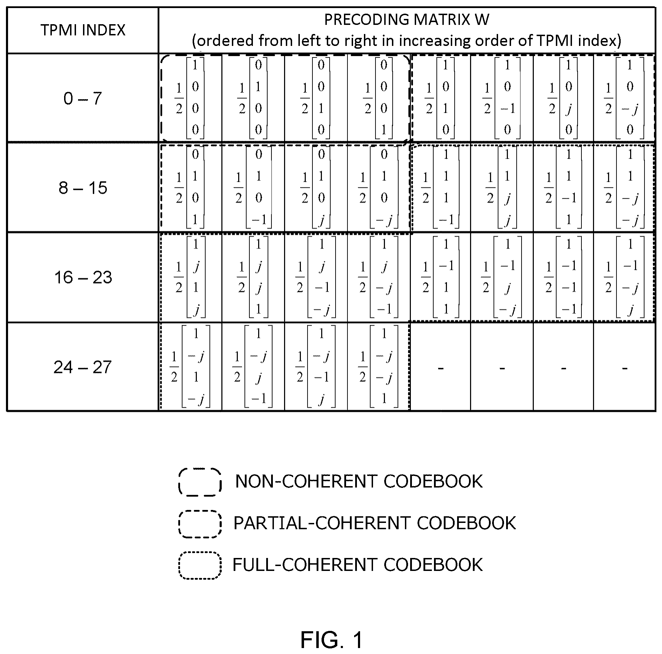

FIG. 1 is a diagram to show an example of association between precoder types and TPMI indices. FIG. 1 corresponds to a table of a precoding matrix W for single-layer (rank 1) transmission using four antenna ports in DFT-s-OFDM (Discrete Fourier Transform spread OFDM, transform precoding is enabled).

In FIG. 1, when a precoder type (codebookSubset) is fullyAndPartialAndNonCoherent, a UE is notified of any one of TPMIs 0 to 27 for single-layer transmission. When a precoder type is partialAndNonCoherent, a UE is configured with any one of TPMIs 0 to 11 for single-layer transmission. When a precoder type is nonCoherent, a UE is configured with any one of TPMIs 0 to 3 for single-layer transmission.

Note that, as shown in FIG. 1, a precoding matrix with columns each having only one component not being 0 may be referred to as a non-coherent codebook. A precoding matrix with columns each having a given number of (not all) components not being 0 may be referred to as a partial-coherent codebook. A precoding matrix with columns each having all components not being 0 may be referred to as a fully-coherent codebook.

A non-coherent codebook and a partial-coherent codebook may each be referred to as an antenna selection precoder. A fully-coherent codebook may be referred to as a non-antenna selection precoder.

Note that, in the present disclosure, a partial-coherent codebook may correspond to codebooks (precoding matrices) obtained by a UE configured with a partial-coherent codebook subset (for example, RRC parameter "codebookSubset" = "partialAndNonCoherent") excluding codebooks corresponding to TPMIs specified to a UE configured with a non-coherent codebook subset (for example, RRC parameter "codebookSubset" = "nonCoherent") from codebooks corresponding to TPMIs specified by DCI for codebook based transmission (specifically, in a case of 4-antenna-port single-layer transmission, codebooks for TPMIs of 4 to 11 (TPMI = 4 to 11)).

Note that, in the present disclosure, a fully-coherent codebook may correspond to codebooks (precoding matrices) obtained by a UE configured with a fully-coherent codebook subset (for example, RRC parameter "codebookSubset" = "fullyAndPartialAndNonCoherent") excluding codebooks corresponding to TPMIs specified to a UE configured with a partial-coherent codebook subset (for example, RRC parameter "codebookSubset" = "partialAndNonCoherent") from codebooks corresponding to TPMIs specified by DCI for codebook based transmission (specifically, in a case of 4-antenna-port single-layer transmission, codebooks for TPMIs of 12 to 27 (TPMI = 12 to 27)).

### (Control of SRS, PUSCH Transmission)

In Rel-15 NR, a terminal (user terminal, User Equipment (UE)) may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may be related to a given number of SRS resources (may group the given number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, an SRS resource type may indicate any of a periodic SRS (P-SRS), a semi-persistent SRS (SP-SRS), and aperiodic CSI (Aperiodic SRS (A-SRS)). Note that the UE may transmit a P-SRS and an SP-SRS periodically (or periodically after activation), and transmit an A-SRS based on an SRS request of DCI.

The usage (RRC parameter "usage," L1 (Layer-1) parameter "SRS-SetUse") may be, for example, beam management (beamManagement), codebook (CB), non-codebook (noncodebook (NCB)), antenna switching, or the like. An SRS with codebook or non-codebook usage may be used to determine a precoder for codebook based or non-codebook based uplink shared channel (Physical Uplink Shared Channel (PUSCH)) transmission based on an SRI.

For example, in a case of codebook based (codebook-based) transmission, the UE may determine a precoder (precoding matrix) for the PUSCH transmission, based on an SRI, a transmitted rank indicator (TRI), and a transmitted precoding matrix indicator (TPMI). In a case of non-codebook based (non-codebook-based) transmission, the UE may determine a precoder for the PUSCH transmission, based on the SRI.

The SRS resource information may include an SRS resource ID (SRS-ResourceId), the number of SRS ports, SRS port numbers, transmission Comb, SRS resource mapping (for example, time and/or frequency resource location, a resource offset, resource periodicity, the number of repetitions, the number of SRS symbols, an SRS bandwidth, and the like), hopping related information, an SRS resource type, a sequence ID, spatial relation information of an SRS, and the like.

The spatial relation information of an SRS (for example, an RRC information element "spatialRelationInfo") may indicate spatial relation information between a given reference signal and an SRS. The given reference signal may be at least one of a synchronization signal/broadcast channel (Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information of an SRS may include at least one of an SSB index, a CSI-RS resource ID, and an SRS resource ID, as an index of the given reference signal.

Note that, in the present disclosure, an SSB index, an SSB resource ID, and an SSB Resource Indicator (SSBRI) may be used interchangeably. A CSI-RS index, a CSI-RS resource ID, and a CSI-RS Resource Indicator (CRI) may be used interchangeably. An SRS index, an SRS resource ID, and an SRI may be used interchangeably.

The spatial relation information of an SRS may include a serving cell index, a BWP index (BWP ID), and the like of the given reference signal.

When spatial relation information related to an SSB or a CSI-RS and an SRS is configured for a given SRS resource, the UE may transmit the SRS resource by using the same spatial domain filter (spatial domain transmission filter) as that for reception of the SSB or the CSI-RS. In this case, the UE may assume that a UE receive beam of the SSB or the CSI-RS and a UE transmit beam of the SRS are the same.

When spatial relation information related to another SRS (reference SRS) and a given SRS (target SRS) is configured for a given SRS (target SRS) resource, the UE may transmit the target SRS resource by using the same spatial domain filter (spatial domain transmission filter) as the spatial domain filter (spatial domain transmission filter) for transmission of the reference SRS. In other words, in this case, the UE may assume that a UE transmit beam of the reference SRS and a UE transmit beam of the target SRS are the same.

The UE may determine a spatial relation of a PUSCH scheduled by DCI (for example, DCI format 0_1), based on the value of a given field (for example, an SRS resource indicator (SRI) field) in the DCI. Specifically, the UE may use, for PUSCH transmission, spatial relation information of an SRS resource determined based on the value (for example, the SRI) of the given field (for example, an RRC information element "spatialRelationInfo").

In Rel-15/16 NR, when codebook based transmission is used for a PUSCH, a UE may be configured with an SRS resource set including two SRS resources at maximum with codebook usage, by RRC, and may be indicated with one of the two SRS resources at maximum by DCI (1-bit SRI field). A transmit beam for the PUSCH may be specified by the SRI field.

The UE may judge a TPMI and the number of layers (transmission rank) for PUSCH, based on the precoding information and number of layers field (also referred to as a precoding information field below). The UE may select a precoder from a codebook for uplink for the same number of ports as the number of SRS ports indicated by a higher layer parameter "nrofSRS-Ports" configured for an SRS resource specified by the SRI field, based on the TPMI, the number of layers, and the like.

In Rel-15/16 NR, when non-codebook based transmission is used for a PUSCH, a UE may be configured with an SRS resource set including four SRS resources at maximum with non-codebook usage, by RRC, and may be indicated with one or more of the four SRS resources at maximum by DCI (two-bit SRI field).

The UE may determine the number of layers (transmission rank) for the PUSCH, based on the SRI field. For example, the UE may judge that the number of SRS resources indicated by the SRI field is the same as the number of layers for the PUSCH. The UE may calculate a precoder for the SRS resource.

When a CSI-RS related to the SRS resource (or SRS resource set to which the SRS resource belongs) (which may be referred to as an associated CSI-RS) is configured in a higher layer, a transmit beam for the PUSCH may be calculated based on (measurement of) the configured related CSI-RS. Otherwise, a transmit beam for the PUSCH may be specified by an SRI.

Note that the UE may be configured with whether to use codebook based PUSCH transmission or use non-codebook based PUSCH transmission by a higher layer parameter "txConfig" indicating a transmission scheme. The parameter may indicate a value of "codebook" or "non-codebook (nonCodebook)."

In the present disclosure, a codebook based PUSCH (codebook based PUSCH transmission, codebook based transmission) may mean a PUSCH when the UE is configured with "codebook" as a transmission scheme. In the present disclosure, a non-codebook based PUSCH (non-codebook based PUSCH transmission, non-codebook based transmission) may mean a PUSCH when the UE is configured with "non-codebook" as a transmission scheme.

For a future radio communication system (for example, Rel-18 NR or later versions), it is assumed to support simultaneous UL transmission using multiple beams/panels/TRPs (for example, simultaneous multi-panel UL transmission (STxMP)) to one or more transmission/reception points (TRPs).

For example, in Rel. 18, simultaneous UL transmission using up to two TRPs/two panels at maximum is studied. In consideration of single-DCI based and multi-DCI based multi-TRP operations, the total number of layers is also assumed to be up to four across all panels, and the total number of codewords is assumed to be up to two across all panels. It is apparent that the number of TRPs, the number of panels, the number of layers, and the number of codewords are not limited to these.

### (TPMI and Transmission Rank)

In Rel. 16, it is studied that a transmitted precoding matrix indicator (TPMI) and a transmission rank for codebook based PUSCH transmission are indicated by a specific field (for example, a precoding information and number of layers field) included in downlink control information (for example, DCI format 0_1). Note that, in the present disclosure, a rank and a layer may be used interchangeably.

A precoder used by a UE for codebook based PUSCH transmission may be selected from uplink codebooks having the number of antenna ports equal to a value configured by a higher layer parameter (for example, nrofSRS-Ports) configured for SRS resource.

The size (number of bits) of the specific field is variable depending on the number of antenna ports (for example, the number of ports indicated by nrofSRS-Ports above) for PUSCH and some higher layer parameters.

The specific field may be 0 bits when a higher layer parameter (for example, txConfig) configured for the UE is configured at nonCodebook.

The specific field may be 0 bits when a higher layer parameter (for example, txConfig) configured for the UE is configured at Codebook for one antenna port.

The specific field may have a bit length of 2 to 6 bits for four antenna ports, based on at least one of another higher layer parameter configured for the UE and presence/absence (enabling/disabling) of a transform precoder, when a higher layer parameter (for example, txConfig) configured for the UE is configured at codebook.

The specific field may have a bit length of 1 to 4 bits for two antenna ports, based on at least one of another higher layer parameter configured for the UE and presence/absence (enabling/disabling) of a transform precoder, when a higher layer parameter (for example, txConfig) configured for the UE is configured at codebook.

The other higher layer parameter may be at least one of a parameter for indicating a UL full power transmission mode (for example, ul-FullPowerTransmission, ul-FullPowerTransmission-r16), a parameter indicating a maximum value of UL transmission rank (for example, maxRank), a parameter indicating a subset of a given precoding matrix indicator (PMI) (for example, codebookSubset), and a parameter for indicating a transform precoder (for example, transformPrecoder).

### (Single-panel Transmission)

As a single-panel UL transmission scheme and a single-panel UL transmission scheme candidate, at least one of transmission schemes A and B (single-panel UL transmission schemes A and B) may be employed. Note that, in the present disclosure, a panel/UE panel and a UE capability value set reported for each UE capability may be used interchangeably. In the present disclosure, a different panel, a different spatial relation, a different joint TCI state, a different TPC parameter, a different antenna port, and the like may be used interchangeably.

### <Transmission Scheme A: Single-panel Single-TRP UL Transmission>

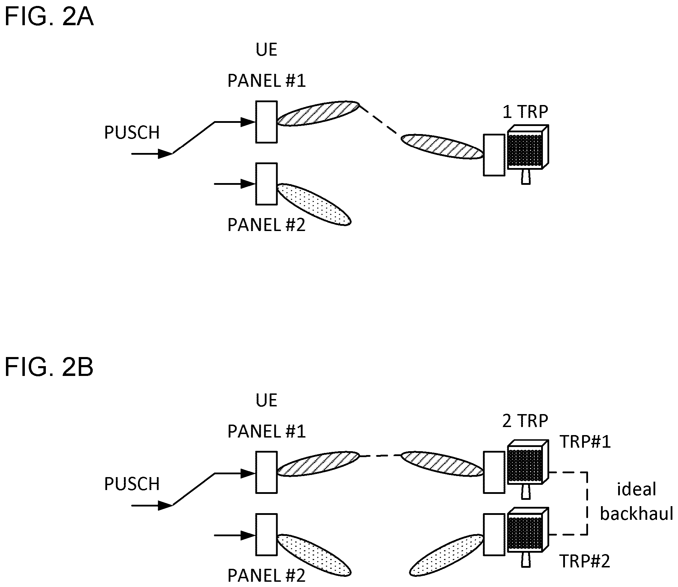

In Rel. 15 and Rel. 16, a UE uses a transmission scheme of transmitting UL from only one beam and panel to one TRP at one time point (FIG. 2A).

### <Transmission Scheme B: Single-panel Multi-TRP UL Transmission>

In Rel. 17, it is studied to perform UL transmission from only one beam and panel at one time point and perform repetition transmissions to multi-TRP (FIG. 2B). In the example in FIG. 2B, a UE transmits, after transmitting a PUSCH from panel #1 to TRP #1 (and switching a beam and the panel), transmits a PUSCH from panel #2 to TRP #2. The two TRPs are connected via ideal backhaul.

### (Multi-panel Transmission)

In Rel. 18 or later versions, for improvement of UL throughput/reliability, it is studied to support simultaneous UL transmission using multiple panels (for example, simultaneous multi-panel UL transmission (STxMP)) to one or more TRPs. For a given UL channel (for example, a PUSCH/PUCCH) and the like, a multi-panel UL transmission scheme is studied.

As multi-panel UL transmission, for example, up to X (for example, X = 2) and up to Y (for example, Y = 2) panels may be supported. In multi-panel UL transmission, when UL precoding indication for PUSCH is supported, a codebook of an existing system (for example, Rel. 16 or a previous version) may be supported for multi-panel simultaneous transmission. When single-DCI and multi-DCI based multi-TRP operations are considered, the number of layers may be up to x (for example, x = 4) for all panels, and the number of codewords (CWs) may be up to y (for example, y = 2) for all panels.

As a multi-panel UL transmission scheme and a multi-panel UL transmission scheme candidate, at least one of schemes 1 to 3 (multi-panel UL transmission schemes 1 to 3) may be employed. Only one of transmission schemes 1 to 3 may be supported. A plurality of schemes including at least one of transmission schemes 1 to 3 may be supported, and one of the plurality of transmission schemes may be configured for a UE.

### <Transmission Scheme 1: Coherent Multi-panel UL Transmission)

Multiple panels may be synchronized with each other. All layers are mapped to all panels. Multiple analog beams are indicated. An SRS resource indicator (SRI) field may be enhanced. This scheme may use up to four layers for UL.

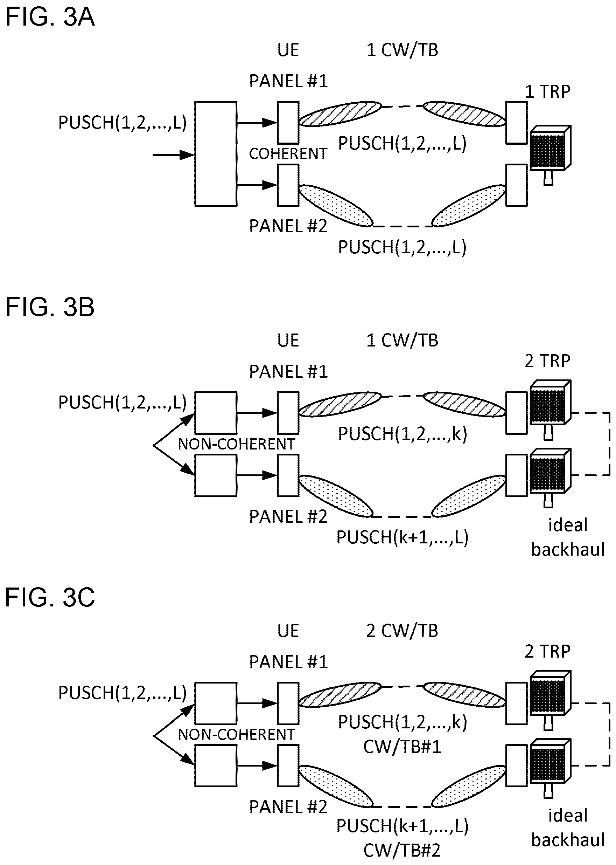

In the example in FIG. 3A, a UE maps one codeword (CW) or one transport block (TB) to L layers (PUSCHs (1, 2, ..., L)) and transmits L layers from each of two panels. Panel #1 and panel #2 are coherent. Transmission scheme 1 can obtain gain from diversity. The total number of layers in the two panels is 2L. When a maximum value of the total number of layers is four, a maximum value of the number of layers per panel is two.

### <Transmission Scheme 2: Non-coherent Multi-panel UL Transmission with One codeword (CW) or Transport Block (TB))

Multiple panels need not be synchronized. Different layers are mapped to different panels and one CW or TB for PUSCHs from the multiple panels. The layers corresponding to the one CW or TB may be mapped to multiple panels. This transmission scheme may use up to four layers or up to eight layers for UL. When up to eight layers are supported, this transmission scheme may support one CW or TB using up to eight layers.

In the example in FIG. 3B, a UE maps one CW or one TB to k layers (PUSCHs (1, 2, ..., k)) and (L - k) layers (PUSCHs (k + 1, k + 2, ..., L)), and transmits k layers from panel #1 while transmitting (L - k) layers from panel #2. Transmission scheme 2 can obtain gain from multiplexing and diversity. The total number of layers in the two panels is L.

### <Transmission Scheme 3: Non-coherent Multi-panel UL Transmission with Two CWs or TBs)

Multiple panels need not be synchronized. Different layers are mapped to different panels and two CWs or TBs for PUSCHs from the multiple panels. A layer corresponding to one CW or TB may be mapped to one panel. Layers corresponding to a plurality of CWs or TBs may be mapped to different panels. This transmission scheme may use up to four layers or up to eight layers for UL. When up to eight layers are supported, this transmission scheme may support up to four layers per CW or TB.

In the example in FIG. 3C, a UE maps CW #1 or TB #1 of two CWs or two TBs to k layers (PUSCHs (1, 2, ..., k)) and maps CW #2 or TB #2 to (L - k) layers (PUSCHs (k + 1, k + 2, ..., L)), and transmits k layers from panel #1 while transmitting (L - k) layers from panel #2. Transmission scheme 3 can obtain gain from multiplexing and diversity. The total number of layers in the two panels is L.

In each transmission scheme above, a base station may use UL TCI or a panel ID to configure or indicate panel-specific transmission for UL transmission. The UL TCI (UL TCI state) may be based on signaling similar to DL beam indication supported in Rel. 15. The panel ID may be implicitly or explicitly applied to transmission of at least one of a target RS resource or a target RS resource set, a PUCCH, an SRS, and a PRACH. When a panel ID is notified explicitly, the panel ID may be configured in at least one of a target RS, a target channel, and a reference RS (for example, a DL RS resource configuration or spatial relation information).

### (Simultaneous Multi-panel Transmission)

Multi-panel UL transmission (for example, simultaneous multi-panel transmission (Simultaneous Transmission across Multiple Panels (STxMP))) for scheduling of a PUSCH based on single DCI/scheduling of a PUSCH based on multiple pieces of DCI (multi-DCI) in the above-described one or more transmission schemes/modes is studied.

### <Single-DCI based STxMP>

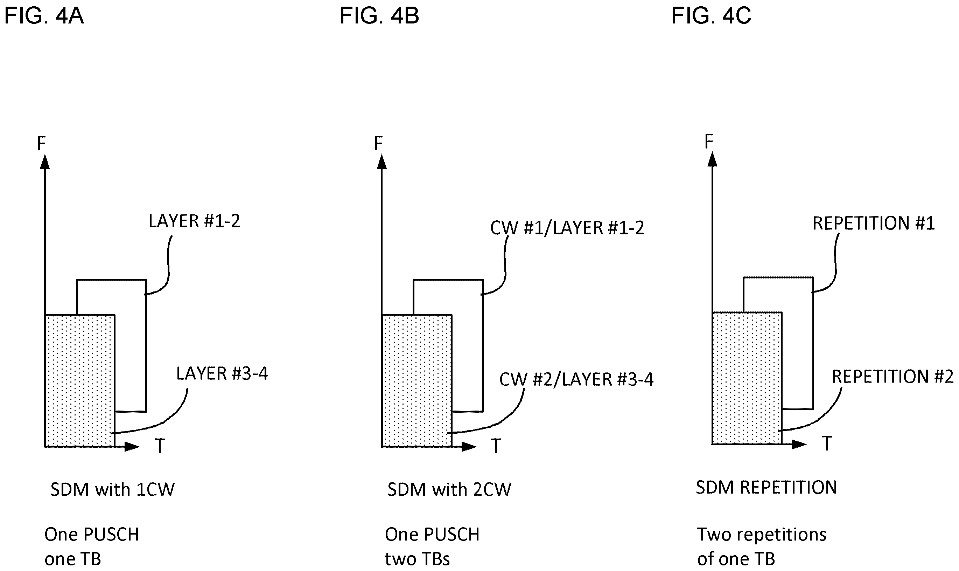

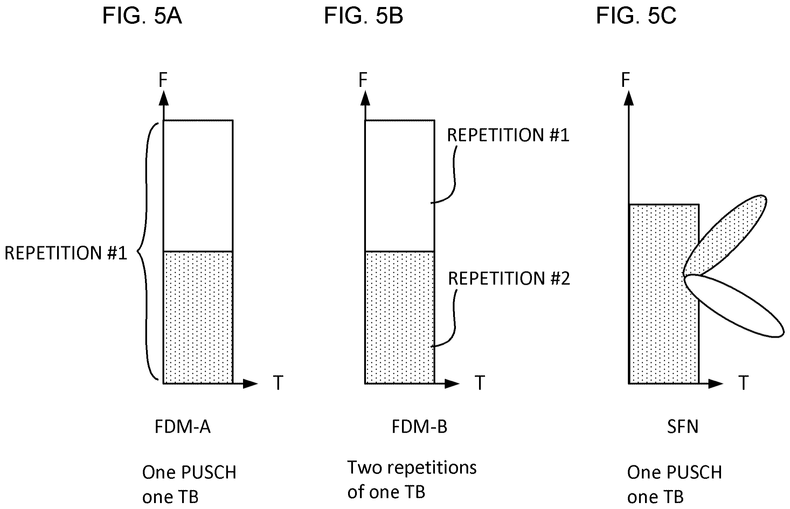

In simultaneous multi-panel transmission (STxMP) in a single-DCI based multi-TRP system, the following schemes may be applied to UL transmission (for example, a PUSCH).
- Space division multiplexing (SDM) scheme: Different layers/DMRS ports of one PUSCH are precoded separately and transmitted from different UE beams/panels simultaneously (refer to FIG. 4A and FIG. 4B).
- Space division multiplexing repetition (SDM repetition) scheme: Two PUSCH transmission occasions having different redundancy versions (RVs) of the same TB are transmitted from two different UE beams/panels simultaneously on the same time and frequency resources (refer to FIG. 4C).
- Frequency division multiplexing (FDM)-A scheme: Different parts of a frequency-domain resource of one PUSCH transmission occasion are transmitted from different UE beams/panels (refer to FIG. 5A).
- FDM-B scheme: Two PUSCH transmission occasions having the same/different RVs of the same TB are transmitted from different UE beams/panels on non-overlapping frequency-domain resources and the same time-domain resource (refer to FIG. 5B).
- SFN based transmission scheme: All the same layers/DMRS ports of one PUSCH are transmitted from two different UE beams/panels simultaneously (refer to FIG. 5C).

Note that, in the present disclosure, repetition transmission and transmission may be used interchangeably. Transmitting a plurality of TBs may mean transmitting the same TB a plurality of times or transmitting different TBs.

### {Space Division Multiplexing (SDM)}

A UE may assume that PUSCH repetition transmissions to which space division multiplexing (SDM) is applied are scheduled in the same time resource and the same frequency resource. In other words, when the UE uses multiple coherent panels, the UE may perform PUSCH repetition transmissions to which SDM is applied, in the same time resource and the same frequency resource.

FIG. 4A is a diagram to show an example of repetition transmissions to which SDM is applied with one CW. In FIG. 4A, the time and frequency resources of layer #1-2 and layer #3-4 corresponding to a PUSCH/PUCCH are the same.

FIG. 4B is a diagram to show an example of repetition transmissions to which SDM is applied with two CWs. In FIG. 4B, the time and frequency resources of CW #1 and CW #2 corresponding to a PUSCH/PUCCH are the same.

FIG. 4C is a diagram to show an example of repetition transmissions to which SDM is applied. In FIG. 4C, the time and frequency resources of repetition #1 and repetition #2 of a PUSCH/PUCCH are the same.

Note that PUSCH transmissions (for example, PUSCH repetition transmissions) to which SDM is applied may be configured with time and frequency resources overlapping at least partially.

### {Frequency Division Multiplexing (FDM)}

A UE may assume that PUSCH/PUCCH repetition transmissions to which frequency division multiplexing (FDM) is applied are scheduled in the same time resource and different frequency resources. In other words, when the UE uses multiple coherent panels, the UE may perform PUSCH/PUCCH repetition transmissions to which FDM is applied, in the same time resource and different frequency resources.

FIG. 5A is a diagram to show a first example of repetition transmissions to which FDM (FDM-A) is applied. FIG. 5A shows an example in which one PUSCH/PUCCH repetition transmission is performed per TB/UCI.

FIG. 5B is a diagram to show a second example of repetition transmissions to which FDM (FDM-B) is applied. FIG. 5B shows an example in which two PUSCH/PUCCH repetition transmissions are performed per TB/UCI.

FIG. 5C is a diagram to show an example of repetition transmissions to which single frequency network (SFN) is applied. FIG. 5C shows an example in which one PUSCH/PUCCH is transmitted per TB/UCI by using different beams/panels.

As shown in FIG. 4A and FIG. 4B, when simultaneous multi-panel transmission based on the space division multiplexing scheme (STxMP SDM scheme) is performed for non-codebook PUSCH transmission, different layers/DMRS ports of one PUSCH may be precoded separately and transmitted from different UP panels simultaneously.

For simultaneous multi-panel transmission based on a non-codebook based PUSCH space division multiplexing scheme, two options below are assumed as SRI indication, for example.

### <<Option 1>>

One SRI combination is indicated. The SRI combination may be indicated by non-codebook SRS resources across two panels (for example, NCB SRS resources across two panels).

### <<Option 2>>

A plurality of (for example, two) SRS combinations are indicated. Each SRI combination may be indicated by non-codebook SRS resources of one panel (for example, NCB SRS resources of one panel).

Each SRI combination may include one or a plurality of SRS resources (for example, an SRS resource(s) for non-codebook). For example, an SRI/SRS resource corresponding to each panel may be indicated by one SRI combination (or SRI field). An SRI combination may be used interchangeably with an SRI set or an SRI group.

### <Multi-DCI based STxMP>

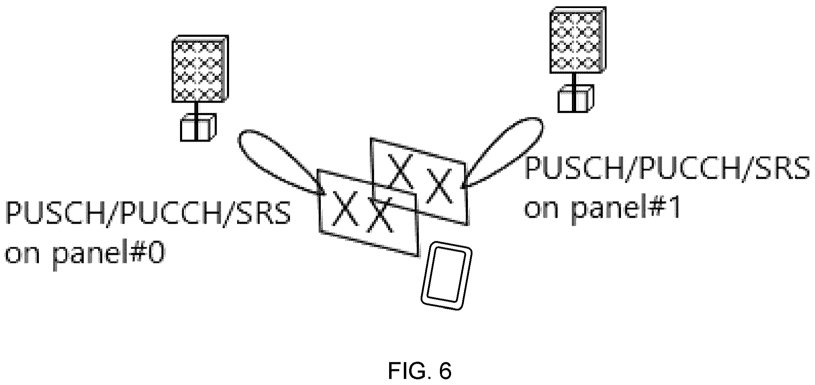

In Rel. 18 or later versions, it is assumed to support UL channel/UL signal simultaneous transmission (for example, PUSCH + PUSCH) in STxMP in a multi-DCI based multi-TRP system (refer to FIG. 6). As an example, it is assumed to support PUSCH simultaneous transmission (for example, PUSCH + PUSCH).

In this case, a UE can simultaneously transmit two independent PUSCHs related to different TRPs in the same active BWP. The total number of layers corresponding to these two PUSCHs may be defined to be up to X (or X or less). X may be four, for example, or may be another value. The maximum number of the number of layers for each of the two PUSCH may be X/2 (for example, two), or may be another value.

For multi-DCI based STxMP, in scheduling of PUSCHs of simultaneous PUSCH transmission (for example, STxMP PUSCH + PUSCH transmission), SRS resource sets and CORESET pool indices may be associated with each other based on a given rule. For example, a first SRS resource set may be associated with a first CORESET pool index (for example, 0), while another SRS resource set may be associated with a second CORESET pool index (for example, 1).

A PUSCH may be associated with an SRS resource set having the same CORESET pool index value. For example, a PUSCH may be associated with an SRS resource set associated with the CORESER pool index of a CORESET corresponding to a PDCCH that schedules the PUSCH.

Different methods of interpreting an SRI/TPMI field in DCI may be used for a dynamic grant based PUSCH (for example, a DG-PUSCH) and a configured grant based PUSCH (for example, a type 2

### CG-PUSCH).

In a case of a DG-PUSCH, a indicated SRI/TPMI field may correspond to an SRS resource set associated with the same CORESET pool index value of a CORESET in which DCI for scheduling the PUSCH (for example, scheduling DCI format 0_1/0_2) is received. In a case of a type 2 CG-PUSCH, a indicated SRI/TPMI field may correspond to an SRS resource set associated with the same CORESER pool index value of a CORESET in which activation DCI is received.

In case of a type 1 CG-PUSCH, one SRS resource set index may be configured in an RRC parameter related to configured grant (for example, ConfiguredGrantConfig), and a given RRC parameter (for example, srs-ResourceIndicator/precodingAndNumberOfLayers) may correspond to the SRS resource set.

For multi-DCI based STxMP (for example, PUSCH + PUSCH), it is also assumed to configure the numbers of SRS resources/SRS ports (or the numbers of SRS ports)/maximum ranks (for example, maxrank)/codebook subsets/full-power modes are separately configured for two panels/TRPs in consideration of asymmetric panels. Asymmetric panels may mean two panels having different capabilities for the number of SRS ports/maximum rank/codebook subset, and the like.

For example, when two SRS resource sets are configured for multi-DCI based STxMP (for example, PUSCH + PUSCH), given different parameters corresponding to the two configured SRS resource sets may be configured. The given parameters may be at least one of, for example, the number of SRS resources, maximum rank/the maximum number of SSB indices (for example, maxRank/Lmax), codebook subset, and full-power mode (for example, fullpower mode), for example.

The size of a given field included in DCI is determined based on the number of SRS resources, a maximum rank, a codebook subset (or the number of codebook subsets) in an SRS resource set. The given field may be an SRI field/TPMI field, for example.

For example, for a CB SRI field, the size of an SRI field is determined based on the number of SRS resources in an SRS resource set. Alternatively, for an NCB SRI field, the size of an SRI field is determined based on the number of SRS resources in an SRS resource set and a maximum rank. Alternatively, for a CB TPMI field, the size of a TPMI field is determined based on the number of antenna ports, a codebook subset, a maximum rank, and a full-power mode.

As described above, it is assumed to support two panels/TRPs/SRS resource sets/CORESET pool indices/PDCCHs/pieces of DCI/CORESETs, configurations with respective different numbers or different values of SRS resources/antenna ports/antenna ports/maximum ranks/full-power modes/codebook subsets. In such a case, how to determine/control the size of a given field (for example, an SRI field/TPMI field) of DCI for a PUSCH scheduled by a different CORESET pool index (or a different PDCCH/DCI) is a problem. When the size of a given field included in DCI cannot be determined/controlled appropriately, UL transmission cannot be performed appropriately, which may degrade communication quality.

Thus, the inventors of the present invention focused on a case where configurations with different numbers or different values of SRS resources/antenna ports/antenna ports/maximum ranks/full-power modes/codebook subsets are supported for two panels/TRPs/SRS resource sets/CORESET pool indices/PDCCHs/pieces of DCI/CORESETs, studied appropriate UL transmission control in such a case, and came up with one aspect of the present embodiment.

Alternatively, the inventors of the present invention focused on a case where switching between single-TRP/single-TRP transmission and simultaneous UL transmission using multi-panel (for example, STxMP) is supported, studied appropriate UL transmission control in such a case, and came up with the idea of one aspect of the present embodiment.

Alternatively, the inventors of the present invention focused on UE operation at the time of bandwidth part (BWP) switching in a case where simultaneous UL transmission using multi-panel (for example, STxMP), studied appropriate UL transmission control in such a case, and came up with the idea of one aspect of the present embodiment.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be used interchangeably. In the present disclosure, "A/B/C" may mean "at least one of A, B, and C."

In the present disclosure, "notify," "activate," "deactivate," "indicate," "select," "configure," "update," "determine," and the like may be used interchangeably. In the present disclosure, "support," "control," "controllable," "operate," "operable," and the like may be used interchangeably.

In the present disclosure, radio resource control (RRC), an RRC parameter, an RRC message, a higher layer parameter, a field, an information element (IE), a configuration, and the like may be used interchangeably. In the present disclosure, a Medium Access Control control element (MAC Control Element (CE)), an update command, an activation/deactivation command, and the like may be used interchangeably.

In the present disclosure, the higher layer signaling may be, for example, any one or combinations of Radio Resource Control (RRC) signaling, Medium Access Control (MAC) signaling, broadcast information, other messages (for example, messages from a core network such as positioning protocol (for example, an NR Positioning Protocol A (NRPPa)/LTE Positioning Protocol (LPP)) message), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, multi-TRP, a multi-TRP system, multi-TRP transmission, multi-PDSCH, a channel using multi-TRP, a channel using a plurality of TCI states/spatial relations, multi-TRP being enabled by RRC/DCI, a plurality of TCI states/spatial relations being enabled by RRC/DCI, and at least one of multi-TRP based on single DCI and multi-TRP based on multi-DCI may be used interchangeably. In the present disclosure, multi-TRP based on multi-DCI and one CORESET pool index (CORESETPoolIndex) value being configured for a CORESET may be used interchangeably. In the present disclosure, multi-TRP based on single DCI and at least one codepoint in a TCI field being mapped to two TCI states may be used interchangeably.

In the present disclosure, a single TRP, single DCI, a single PDCCH, multi-TRP based on single DCI, a single-TRP system, single TRP transmission, a single PDSCH, a channel using a single TRP, a channel using one TCI state/spatial relation, multi-TRP being not enabled by RRC/DCI, a plurality of TCI states/spatial relations being not enabled by RRC/DCI, one CORESET pool index (CORESETPoolIndex) value being not configured for any CORESET and any codepoint of a TCI field being not mapped to two TCI states, and two TCI states of at least one TCI codepoint being activated may be used interchangeably.

In the present disclosure, "switch," "determine," and "select" may be used interchangeably.

In the present disclosure, a panel, a TRP, an SRS resource set, and a CORESET pool index may be used interchangeably. In the present disclosure, a first/second SRS resource set may refer to an SRS resource set having a low/high index (or ID).

In the following embodiments, a case where two SRS resource sets are configured is used as an example for description. However, the number of configurable SRS resource sets is not limited to two and may be three or more. In the following description, two SRS resource sets may be used interchangeably with X SRS resource sets (for example, X is two or more).

### (Radio Communication Method)

### <First Embodiment>

In a first embodiment, an example of a method of determining/controlling a given field (for example, an SRI field for CB) included in DCI will be described.

The first embodiment may preferably be applied to a case where different numbers of SRS resources are configured for two SRS resource sets associated with two CORESET pool indices in multi-DCI based UL simultaneous transmission (for example, M-DCI STxMP PUSCH + PUSCH). An SRS resource set may be an SRS resource set for codebook (CB SRS resource set).

For example, the first embodiment may be applied to a case where the numbers of SRS resources (for example, the different numbers of SRS resources) are configured separately for a first SRS resource set associated with a first CORESET pool index and a second SRS resource set associated with a second CORESET pool index. It is apparent that the first embodiment may be applied to a case other than the above-described case.

For an SRI field included in DCI, at least one of option 1-1 and option 1-2 below may be applied.

### {Option 1-1}

The size of an SRI field may be determined based on a CORESET in which DCI is monitored. For example, the size of an SRI field included in DCI may be determined based on the number of SRS resources of an SRS resource set associated with the CORESER pool index of a CORESET in which the DCI is monitored.

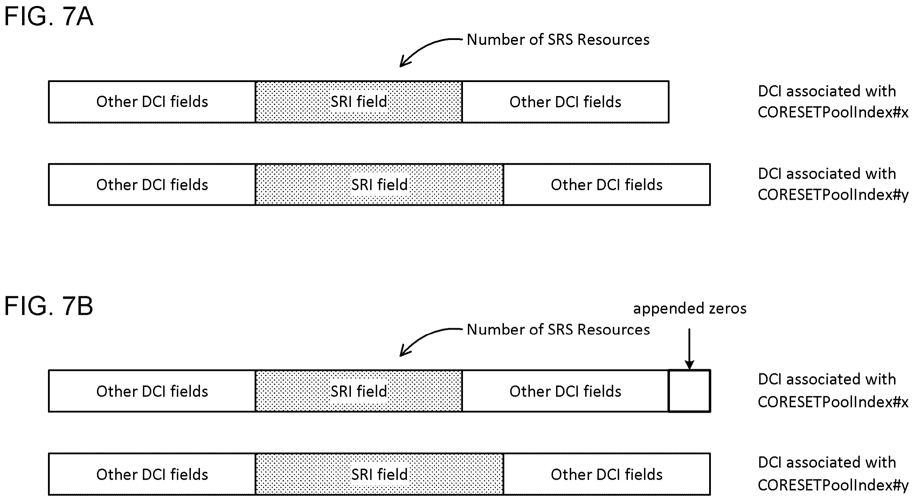

For example, a UE may judge the size of an SRI field included in first DCI, based on the number of SRS resources included in a first SRS resource set associated with the CORESER pool index (for example, #x) of a CORESET in which the first DCI is monitored (refer to FIG. 7A). The UE may judge the size of an SRI field included in second DCI, based on the number of SRS resources included in a second SRS resource set associated with the CORESER pool index (for example, #y) of a CORESET in which the second DCI is monitored.

Here, a case where the size of the SRI field of the first DCI (or the number of SRS resources included in the first SRS resource set) and the size of the SRI field of the second DCI (or the number of SRS resources included in the second SRS resource set) are different from each other is shown.

With this, even when the number of SRS resources is configured separately for each SRS resource set, the size of the SRI field included in each DCI can be appropriately determined.

DCI size alignment may be performed between DCI corresponding to first CORESER pool index #x and DCI corresponding to second CORESER pool index #y. In this case, by assuming that the size of one DCI (for example, the DCI corresponding to first CORESER pool index #x) is smaller than the size of the other DCI (for example, the DCI corresponding to second CORESER pool index #y), DCI sizes may be aligned.

For example, until the size of one DCI (for example, the DCI corresponding to first CORESER pool index #x) becomes equal to the size of the other DCI (for example, the DCI corresponding to second CORESER pool index #y), 0 (for example, a padding bit(s)) may be added to the one DCI (refer to FIG. 7B).

#x may be 0 (#x = 0) while #y may be 1 (#y = 1), or #x may be 1 (#x = 1) while #y may be 0 (#y = 0).

### {Option 1-2}

The size of an SRI field may be determined without being based on a CORESET in which DCI is monitored (or independently from the CORESET/irrespective of the CORESET). For example, the size of an SRI field included in DCI may be determined (a larger size of first size #x and second size #y may be applied) based on the largest value of first size #x and second size #y.

First size #x may be the size of valid bits of an SRI field determined based on the number of SRS resources of an SRS resource set associated with first CORESET pool index #x. Second size #y may be the size of valid bits of an SRI field determined based on the number of SRS resources of an SRS resource set associated with second CORESET pool index #y.

Assume a case where first size #x is smaller than second size #y (for example, a case where the number of SRS resources of the SRS resource set associated with first CORESET pool index #x is smaller than the number of SRS resources of the SRS resource set associated with a second CORESET pool index #y).

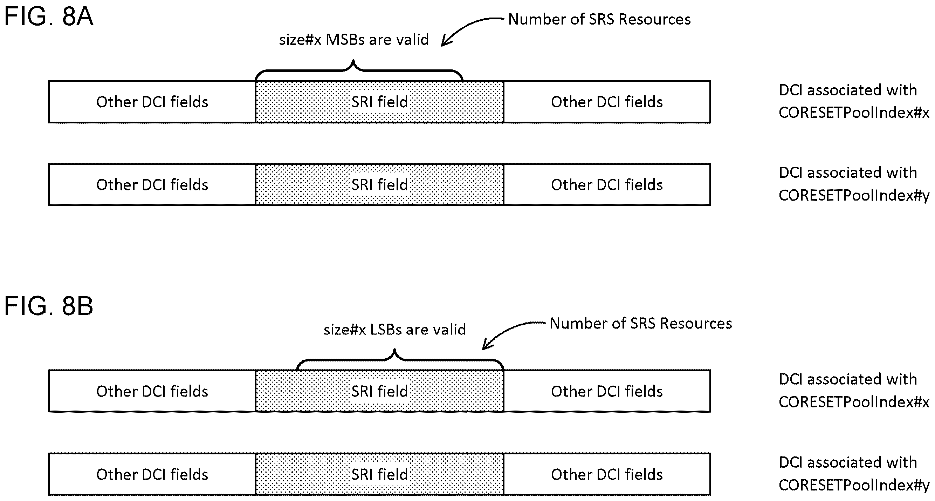

In this case, to interpret the SRI field of the first DCI of first CORESET pool index #x, only the most significant bits (for example, the MSBs) for first size #x may be valid or used (refer to FIG. 8A). Alternatively, to interpret the SRI field of the first DCI of first CORESET pool index #x, only the least significant bits (for example, the LSBs) for first size #x may be valid or used (refer to FIG. 8B). Also, for a case where second size #y is smaller than first size #x, the SRI field of the second DCI related to second CORESET pool index #y may similarly be interpreted.

A UE may ignore invalid bits/unused bits. Alternatively, a given value (for example, all 0 or all 1) may be configured for invalid bits/unused bits. The UE may assume/expect/judge that invalid bits/unused bits take a given value (for example, all 0 or all 1).

As described above, by determining/controlling valid bits/bits to be used in an SRI field, based on the corresponding number of SRS resources, the size of SRI fields of the first DCI and the size of second DCI can be configured to be the same even when the number of SRS resources is configured separately for each SRS resource set. With this, size alignment (for example, appending of a padding bit(s)) attributable for a difference in size of SRI fields can be unnecessary.

### <Second Embodiment>

In a second embodiment, an example of a method of determining/controlling a given field (for example, an SRI field for NCB) included in DCI will be described.

The second embodiment may preferably be applied to a case where different numbers of SRS resources/maximum ranks are configured for two SRS resource sets associated with two CORESET pool indices in multi-DCI based UL simultaneous transmission (for example, M-DCI STxMP PUSCH + PUSCH). An SRS resource set may be an SRS resource set for non-codebook (NCB SRS resource set).

For example, the second embodiment may be applied to a case where the numbers of SRS resources/maximum ranks (for example, the different numbers of SRS resources/different maximum ranks) are configured separately for a first SRS resource set associated with a first CORESET pool index and a second SRS resource set associated with a second CORESET pool index. It is apparent that the second embodiment may be applied to a case other than the above-described case.

For an SRI field included in DCI, at least one of option 2-1 and option 2-2 below may be applied.

### {Option 2-1}

The size of an SRI field may be determined based on a CORESET in which DCI is monitored. For example, the size of an SRI field included in DCI may be determined based on at least one of the number of SRS resources and a maximum rank associated with the CORESER pool index of a CORESET in which the DCI is monitored.

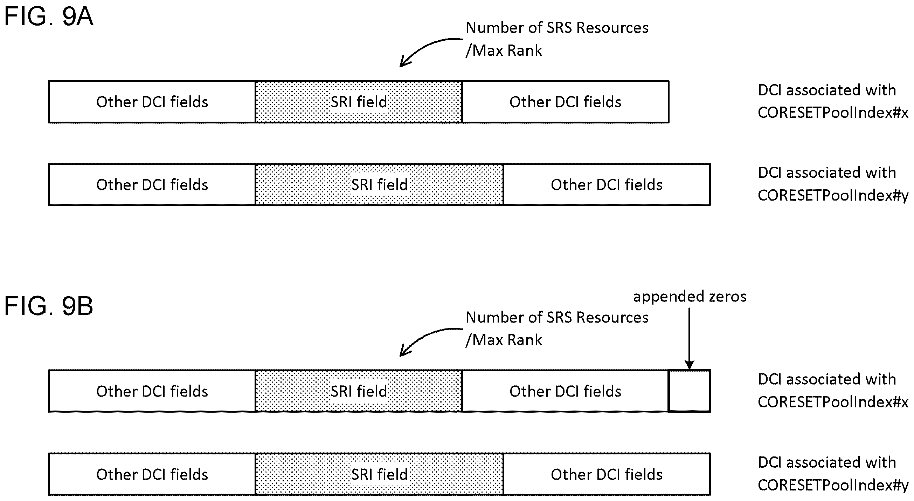

For example, a UE may judge the size of an SRI field included in first DCI, based on at least one of the number of SRS resources included in a first SRS resource set and a maximum rank associated with the CORESER pool index (for example, #x) of a CORESET in which the first DCI is monitored (refer to FIG. 9A). The UE may judge the size of an SRI field included in second DCI, based on at least one of the number of SRS resources included in a second SRS resource set and a maximum rank associated with the CORESER pool index (for example, #y) of a CORESET in which the second DCI is monitored.

Here, a case where the size of the SRI field of the first DCI (or the first number of SRS resources included in the first SRS resource set/first maximum rank) and the size of the SRI field of the second DCI (or the second number of SRS resources included in the second SRS resource set/second maximum rank) are different from each other is shown.

With this, for a CORESER pool index, even when the number of SRS resources is configured separately/when a maximum rank is configured separately for each SRS resource set, the size of the SRI field included in each DCI can be appropriately determined.

DCI size alignment may be performed between DCI corresponding to first CORESER pool index #x and DCI corresponding to second CORESER pool index #y. In this case, by assuming that the size of one DCI (for example, the DCI corresponding to first CORESER pool index #x) is smaller than the size of the other DCI (for example, the DCI corresponding to second CORESER pool index #y), DCI sizes may be aligned.

For example, until the size of one DCI (for example, the DCI corresponding to first CORESER pool index #x) becomes equal to the size of the other DCI (for example, the DCI corresponding to second CORESER pool index #y), 0 (for example, a padding bit(s)) may be added to the one DCI (refer to FIG. 9B).

#x may be 0 (#x = 0) while #y may be 1 (#y = 1), or #x may be 1 (#x = 1) while #y may be 0 (#y = 0).

### {Option 2-2}

The size of an SRI field may be determined without being based on a CORESET in which DCI is monitored (or independently from the CORESET/irrespective of the CORESET). For example, the size of an SRI field included in DCI may be determined (a larger size of first size #x and second size #y may be applied) based on the largest value of first size #x and second size #y.

First size #x may be the size of valid bits of an SRI field determined based on at least one of the number of SRS resources and a maximum rank associated with first CORESET pool index #x. Second size #y may be the size of valid bits of an SRI field determined based on at least one of the number of SRS resources and a maximum rank associated with second CORESET pool index #y.

Assume a case where first size #x is smaller than second size #y (for example, a case where the number of SRS resources/maximum rank associated with first CORESET pool index #x is smaller than the number of SRS resources/maximum rank associated with a second CORESET pool index #y).

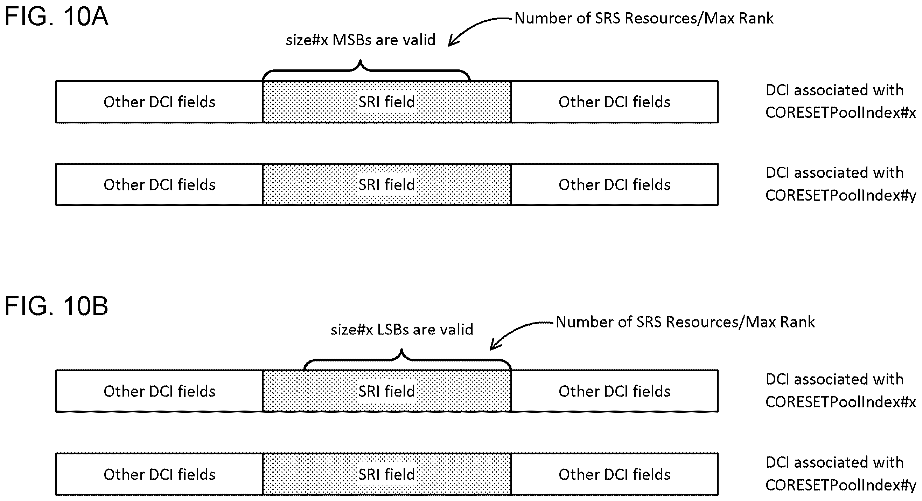

In this case, to interpret the SRI field of the first DCI related to first CORESET pool index #x, only the most significant bits (for example, the MSBs) for first size #x may be valid or used (refer to FIG. 10A). Alternatively, to interpret the SRI field of the first DCI related to first CORESET pool index #x, only the least significant bits (for example, the LSBs) for first size #x may be valid or used (refer to FIG. 10B). Also, for a case where second size #y is smaller than first size #x, the SRI field of the second DCI related to second CORESET pool index #y may similarly be interpreted.

The UE may ignore invalid bits/unused bits. Alternatively, a given value (for example, all 0 or all 1) may be configured for invalid bits/unused bits. The UE may assume/expect/judge that invalid bits/unused bits take a given value (for example, all 0 or all 1).

As described above, by determining/controlling valid bits/bits to be used in an SRI field, based on the corresponding number of SRS resources/maximum rank, the size of SRI fields of the first DCI and the size of second DCI can be configured to be the same even when the number of SRS resources/maximum rank is configured separately. With this, size alignment (for example, appending of a padding bit(s)) attributable for a difference in size of SRI fields can be unnecessary.

### <Third Embodiment>

In a third embodiment, an example of a method of determining/controlling a given field (for example, a TPMI field for CB) included in DCI will be described.

The third embodiment may preferably be applied to a case where different numbers or contents of antenna ports/SRS ports/codebook subsets/full-power modes are configured for two SRS resource sets associated with two CORESET pool indices in multi-DCI based UL simultaneous transmission (for example, M-DCI STxMP PUSCH + PUSCH). An SRS resource set may be an SRS resource set for codebook (CB SRS resource set). A number or a content may be used interchangeably with a number or a value.

For example, the numbers or contents of antenna ports/SRS ports/codebook subsets/full-power modes are configured separately for a first SRS resource set associated with a first CORESET pool index and a second SRS resource set associated with a second CORESET pool index. It is apparent that the third embodiment may be applied to a case other than the above-described case.

For a TPMI field included in DCI, at least one of option 3-1 and option 3-2 below may be applied.

### {Option 3-1}

The size of a TPMI field may be determined based on a CORESET in which DCI is monitored. For example, the size of a TPMI field included in DCI may be determined based on a given parameter associated with the CORESER pool index of a CORESET in which the DCI is monitored. The given parameter may be the number/content of antenna ports/SRS ports/codebook subsets/full-power modes, for example.

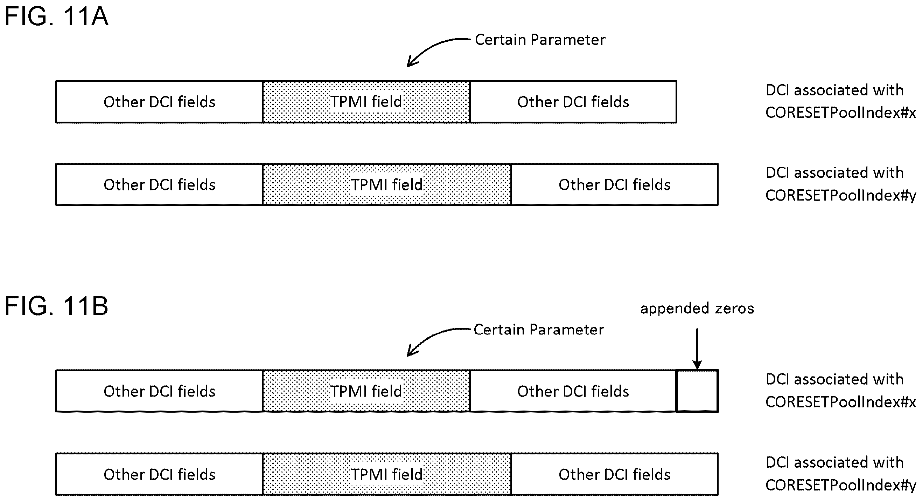

For example, a UE may judge the size of a TPMI field included in first DCI, based on the number or content of antenna ports/SRS ports/codebook subsets/full-power modes associated with the CORESER pool index (for example, #x) of a CORESET in which the first DCI is monitored (refer to FIG. 11A). The UE may judge the size of a TPMI field included in second DCI, based on the number or content of antenna ports/SRS ports/codebook subsets/full-power modes associated with the CORESER pool index (for example, #y) of a CORESET in which the second DCI is monitored.

Here, a case where the size of the TPMI field of the first DCI (or antenna ports/SRS ports/codebook subsets/full-power modes corresponding to first CORESET pool index #x or the first SRS resource set) and the size of the TPMI field of the second DCI (or antenna ports/SRS ports/codebook subsets/full-power modes corresponding to second CORESET pool index #y or the second SRS resource set) are different from each other is shown.

With this, even when the number or content of antenna ports/SRS ports/codebook subsets/full-power modes is configured separately for each CORESET pool index/SRS resource set, the size of the TPMI field included in each DCI can be appropriately determined.

DCI size alignment may be performed between DCI corresponding to first CORESER pool index #x and DCI corresponding to second CORESER pool index #y. In this case, by assuming that the size of one DCI (for example, the DCI corresponding to first CORESER pool index #x) is smaller than the size of the other DCI (for example, the DCI corresponding to second CORESER pool index #y), DCI sizes may be aligned.

For example, until the size of one DCI (for example, the DCI corresponding to first CORESER pool index #x) becomes equal to the size of the other DCI (for example, the DCI corresponding to second CORESER pool index #y), 0 (for example, a padding bit(s)) may be added to the one DCI (refer to FIG. 11B).

#x may be 0 (#x = 0) while #y may be 1 (#y = 1), or #x may be 1 (#x = 1) while #y may be 0 (#y = 0).

### {Option 3-2}

The size of a TPMI field may be determined without being based on a CORESET in which DCI is monitored (or independently from the CORESET/irrespective of the CORESET). For example, the size of a TPMI field included in DCI may be determined (a larger size of first size #x and second size #y may be applied) based on the largest value of first size #x and second size #y.

First size #x may be the size of valid bits of a TPMI field determined based on a given parameter (for example, the number or content of antenna ports/SRS ports/codebook subsets/full-power modes) associated with first CORESET pool index #x. Second size #y may be the size of valid bits of a TPMI field determined based on a given parameter (for example, the number or content of antenna ports/SRS ports/codebook subsets/full-power modes) associated with second CORESET pool index #y.

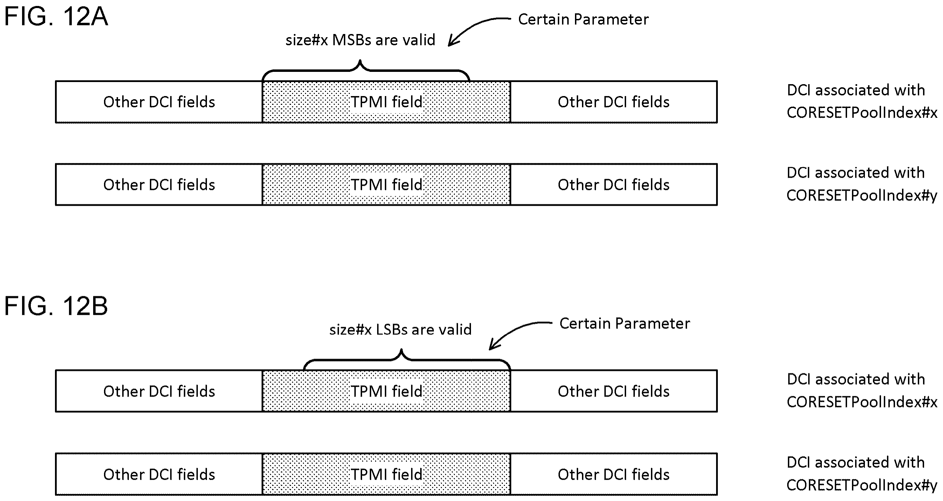

Assume a case where first size #x is smaller than second size #y. In this case, to interpret the TPMI field of the first DCI of first CORESET pool index #x, only the most significant bits (for example, the MSBs) for first size #x may be valid or used (refer to FIG. 12A). Alternatively, to interpret the TPMI field of the first DCI of first CORESET pool index #x, only the least significant bits (for example, the LSBs) for first size #x may be valid or used (refer to FIG. 12B). Also, for a case where second size #y is smaller than first size #x, the TPMI field of the second DCI related to second CORESET pool index #y may similarly be interpreted.

A UE may ignore invalid bits/unused bits. Alternatively, a given value (for example, all 0 or all 1) may be configured for invalid bits/unused bits. The UE may assume/expect/judge that invalid bits/unused bits take a given value (for example, all 0 or all 1).

As described above, by determining/controlling valid bits/bits to be used in a TPMI field, based on the corresponding number/content of antenna ports/SRS ports/codebook subsets/full-power modes, the size of TPMI fields of the first DCI and the size of second DCI can be configured to be the same even when the number or content of antenna ports/SRS ports/codebook subsets/full-power modes is configured separately for each SRS resource set. With this, size alignment (for example, appending of a padding bit(s)) attributable for a difference in size of TPMI fields can be unnecessary.

### <Fourth Embodiment>

In a fourth embodiment, an example of a method of determining/controlling a given field (for example, an SRI field/TPMI field) included in DCI when dynamic switching between a first transmission mode (for example, single-TRP/single-panel transmission) and a second transmission mode (for example, simultaneous transmission using multiple panels (for example, STxMP)) is supported will be described.

In simultaneous multi-panel PUSCH transmission in a single-DCI based multi-TRP system, a space division multiplexing scheme (SDM scheme) may be applied (STxMP SDM Tx). For example, different layers/DMRS ports of one PUSCH may be precoded separately and transmitted from different UE panels simultaneously.

Dynamic switching between the first transmission mode (for example, a single panel) and the second transmission mode (for example, simultaneous transmission in the space division multiplexing scheme using multiple panels (for example, STxMP SDM)) (dynamic STxMP and single panel switching) may be supported. A transmission mode may be used interchangeably with a transmission type, a transmission scheme, or a transmission method.

In this case, a different number or content of SRS resources/antenna ports/maximum ranks/codebook subsets/full-power modes may be configured for single-TRP transmission using TRP #1 (for example, sTRP Tx with TRP #1)/single-TRP transmission using TRP #2 (for example, sTRP Tx with TRP #2)/simultaneous multi-panel transmission in the space multiplexing scheme using TRP #1 (for example, STxMP SDM Tx with TRP #1)/simultaneous multi-panel transmission in the space multiplexing scheme using TRP #2 (for example, STxMP SDM Tx with TRP #2).

Alternatively, a different number or content of SRS resources/antenna ports/maximum ranks/codebook subsets/full-power modes may be configured for single-TRP transmission associated with a given SRS resource set/simultaneous multi-panel transmission in the space multiplexing scheme associated with a given SRS resource set.

The single-TRP transmission associated with a given SRS resource set may be single-TRP transmission associated with a first SRS resource set (for example, sTRP Tx associated with first SRS resource set)/single-TRP transmission associated with a second SRS resource set (for example, sTRP Tx associated with second SRS resource set), for example.

The simultaneous multi-panel transmission in the space multiplexing scheme associated with a given SRS resource set may be simultaneous multi-panel transmission in the space multiplexing scheme associated with a first SRS resource set (for example, STxMP SDM Tx associated with first SRS resource set)/simultaneous multi-panel transmission in the space multiplexing scheme associated with a second SRS resource set (for example, STxMP SDM Tx associated with second SRS resource set), for example.

As described above, when configuration different parameter (for example, the number of SRS resources/the number of antenna ports/maximum rank/codebook subset/full-power mode) configurations are supported for single-TRP/single-panel transmission and simultaneous transmission using multiple panels, the bit sizes (for example, the size of valid bits) in a given field may also be configured separately. For example, the size of valid bits of a given field (for example, an SRI field/TPMI field) may be different in a case where single-TRP transmission associated with a first SRS resource set/single-TRP transmission associated with a second SRS resource set/simultaneous multi-panel transmission in the space multiplexing scheme may be different.

The size of valid bits of a given field (for example, an SRI field/TPMI field) of DCI may be determined based on which transmission mode (for example, single-panel transmission/simultaneous multi-panel transmission)/which SRS resource set is used and a given parameter corresponding to the transmission mode/SRS resource set. The given parameter may be the number of SRS resources/number of antenna ports/maximum rank/codebook subset/full-power mode, for example. Which transmission mode (for example, single-panel transmission/simultaneous multi-panel transmission) is used may be used interchangeably with a transmission mode corresponding to which SRS resource set (for example, the first SRS resource set/second SRS resource set) is used.

For example, the size of valid bits a given field may be determined based on whether single-TRP transmission associated with the first SRS resource set/single-TRP transmission associated with the second SRS resource set/simultaneous multi-panel transmission in the space multiplexing scheme is indicated (or which transmission mode is indicated/which SRS resource set is indicated). Further, the size of valid bits of an SRI field/TPMI field may be determined based on a given parameter configured for single-TRP transmission associated with the first SRS resource set/single-TRP transmission associated with the second SRS resource set/simultaneous multi-panel transmission in a space multiplexing scheme associated with the first SRS resource set/simultaneous multi-panel transmission in the space multiplexing scheme associated with a third SRS resource set (or a given parameter corresponding to each SRS resource set).

Information related to a transmission mode to be applied/corresponding SRS resource set may be indicated to/configured for a UE by using DCI/MAC CE/RRC.

Size N of a given field (for example, at least one of a TPMI field/SRI field) included in DCI may be determined (or the largest size of first valid bit size #x, second valid bit size #y, and third valid bit size #z is applied) based on the largest value of first valid bit size #x, second valid bit size #y, and third valid bit size #z.

First valid bit size #x may correspond to the size of valid bits of the given field when single-TRP transmission associated with the first SRS resource set is indicated. Second valid bit size #y may correspond to the size of valid bits of the given field when single-TRP transmission associated with the second SRS resource set is indicated. Third valid bit size #z may correspond to the size of valid bits of the given field when simultaneous multi-TRP transmission in the space multiplexing scheme is indicated. Size N of the given field may be configured to be the largest size of size #x, size #y, and size #z.

A case where a single TRP associated with the first SRS resource set, a single TRP associated with the second SRS resource set, or simultaneous multi-panel transmission in the space multiplexing scheme is indicated and size #x, size #y, or size #z is smaller than N also occurs. In this case, only the most significant bits (MSBs) or the least significant bits (LSBs) of part (for example, size #x, size #y, or size #z) of the given field may be valid or used.

For example, when the single-TRP transmission associated with the first SRS resource set is configured for/indicated to the UE, the UE may assume/judge that the size of valid bits of the given field is size #x. Alternatively, when the single-TRP transmission associated with the second SRS resource set is configured for/indicated to the UE, the UE may assume/judge that the size of valid bits of the given field is size #y. Alternatively, when the simultaneous multi-panel transmission in the space multiplexing scheme is configured for/indicated to the UE, the UE may assume/judge that the size of valid bits of the given field is size #z.

The UE may ignore invalid bits/unused bits. Alternatively, a given value (for example, all 0 or all 1) may be configured for invalid bits/unused bits. The UE may assume/expect/judge that invalid bits/unused bits take a given value (for example, all 0 or all 1).

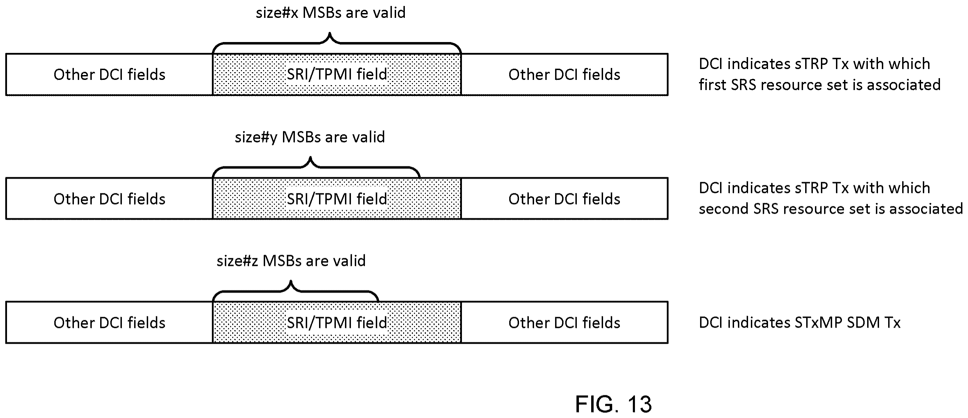

For example, assume a case where size #x > size #y ≥ size #z. In this case, size N of the given field may be configured to be equal to size #x. When a UE is indicated with the single-TRP transmission associated with the first SRS resource set by DCI/MAC CE, only the most significant bits (for example, MSBs) of size #x may be valid or used for a given field (for example, a TPMI field/SRI field) (refer to FIG. 13).

When the UE is indicated with the single-TRP transmission associated with the second SRS resource set by DCI/MAC CE, only the most significant bits (for example, MSBs) of size #y may be valid or used for a given field (for example, a TPMI field/SRI field). When the UE is indicated with the simultaneous multi-panel transmission (for example, STxMP SDM Tx) in the space multiplexing scheme by DCI/MAC CE, only the most significant bits (for example, MSBs) for size #z may be valid or used for a given field (for example, a TPMI field/SRI field).

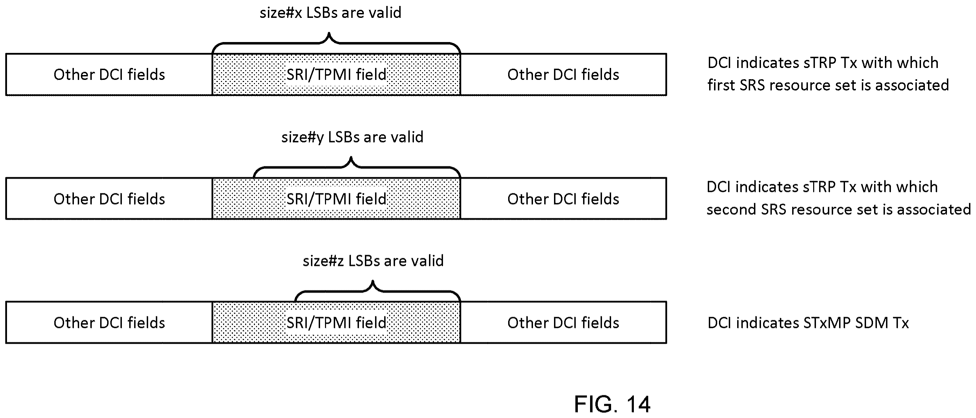

Alternatively, when the UE is indicated with the single-TRP transmission associated with the first SRS resource set by DCI/MAC CE, only the least significant bits (for example, LSBs) for size #x may be valid or used for a given field (for example, a TPMI field/SRI field) (refer to FIG. 14).

When the UE is indicated with the single-TRP transmission associated with the second SRS resource set by DCI/MAC CE, only the least significant bits (for example, LSBs) of size #y may be valid or used for a given field (for example, a TPMI field/SRI field). When the UE is indicated with the simultaneous multi-panel transmission (for example, STxMP SDM Tx) in the space multiplexing scheme by DCI/MAC CE, only the least significant bits (for example, LSBs) for size #z may be valid or used for a given field (for example, a TPMI field/SRI field).

Simultaneous multi-panel transmission in the space multiplexing scheme (for example, STxMP SDM Tx) may be categorized into STxMP SDM transmission in the order of TRP #1-TRP #2 and STxMP SDM transmission in the order of TRP #2-TRP #1.

STxMP SDM transmission in the order of TRP #1-TRP #2 may mean that a first L1 layer/DMRS port is associated with a first SRS resource set while the remaining layer(s)/DMRS port(s) is associated with a second SRS resource set. STxMP SDM transmission in the order of TRP #2-TRP #1 may mean that the first L1 layer/DMRS port is associated with the second SRS resource set while the remaining layer(s)/DMRS port(s) is associated with the first SRS resource set.

Note that simultaneous multi-panel transmission in the space multiplexing scheme (for example, STxMP SDM Tx) is associated with different SRS resource sets, valid bit size #z1 corresponding to simultaneous multi-panel transmission associated with the first SRS resource set and valid bit size #z2 corresponding to simultaneous multi-panel transmission associated with the second SRS resource set may be supported.

Transmission type indication/SRS resource set indication may be given from a base station to a UE by DCI/MAC CE. For example, single-TRP transmission associated with the first SRS resource set (for example, sTRP TX associated with first SRS resource set) may be indicated by an SRS resource set indication field (for example, '00') of DCI. Single-TRP transmission associated with the second SRS resource set (for example, sTRP TX associated with second SRS resource set) may be indicated by an SRS resource set indication field (for example, '01') of DCI.

Simultaneous multi-panel transmission in the space multiplexing scheme (for example, STxMP SDM Tx) may be indicated by an SRS resource set indication field (for example, '10' or '11') of DCI. Note that, when STxMP SDM Tx is categorized into STxMP SDM transmission in the order of TRP #1-TRP #2 and STxMP SDM transmission in the order of TRP #2-TRP #1, either of these may be indicated by DCI. For example, STxMP SDM transmission in the order of TRP #1-TRP #2 (for example, STxMP SDM Tx with TRP #1-TRP #2 order) may be indicated by an SRS resource set indication field (for example, '10') of DCI. STxMP SDM transmission in the order of TRP #2-TRP #1 (for example, STxMP SDM Tx with TRP #2-TRP #1 order) may be indicated by an SRS resource set indication field (for example, '11') of DCI.

The fourth embodiment may be applied without being limited to a case where dynamic switching between single-DCI based UL simultaneous transmission in the space division multiplexing scheme (for example, STxMP SDM) and a single panel is supported. For example, the fourth embodiment may be applied to a case where dynamic switching between multi-DCI based UL simultaneous transmission in the space division multiplexing scheme (for example, STxMP SDM) and a single panel is supported. A case where multi-DCI based UL simultaneous transmission in the space division multiplexing scheme is indicated/configured may be used interchangeably with a case where a plurality of (for example, two) SRS resource sets/CORESET pool indices are configured. A case where a single TRP is configured may be used interchangeably with a case where one SRS resource set/CORESET pool index is configured.

### <Fifth Embodiment>

In a fifth embodiment, an example of a method of controlling UL transmission (for example, PUSCH transmission) when switching of bandwidth parts (for example, BWPs) is performed.

The fifth embodiment may preferably be applied to a case of switching of BWPs where application of different transmission modes (single-TRP transmission/single-panel transmission and simultaneous multi-panel transmission (STxMP) using multiple panels) is supported for the BWPs before and after the switching. It is apparent that application of the fifth embodiment is not limited to this.

For multi-DCI based simultaneous UL transmission (for example, PUSCH + PUSCH), each PUSCH may be associated with a given SRS resource set. The given SRS resource set may be an SRS resource set associated with the CORESET pool index for DCI for scheduling the PUSCH.

When switching of BWPs (for example, BWP switching) is supported, the bandwidth part indicator field of DCI received in BWP #a indicates different BWP #b in some cases. In this case, when two SRS resource sets/CORESET pool indices are configured in BWP #b indicated, a PUSCH (for example the PUSCH scheduled by the DCI) is associated with which SRS resource set is a problem.

In the fifth embodiment, when switching of BWPs is performed, an SRS resource set/CORESET pool index corresponding to a PUSCH may be judged/determined based on a given rule.

### - Case 5-1

When different BWP #b, which is different from BWP #a, is indicated by a bandwidth part indication field of DCI detected in BWP #a, and multi-DCI based simultaneous transmission (for example, M-DCI STxMP PUSCH + PUSCH) is configured in BWP #b indicated, at least one of option 5-1 and option 5-2 below may be applied to BWP switching. Note that a case where multi-DCI based simultaneous transmission (for example, M-DCI STxMP PUSCH + PUSCH) is configured in BWP #b indicated may be used interchangeably with a case where two SRS resource sets/CORESET pool indices are configured in BWP #b indicated.

### {Option 5-1}

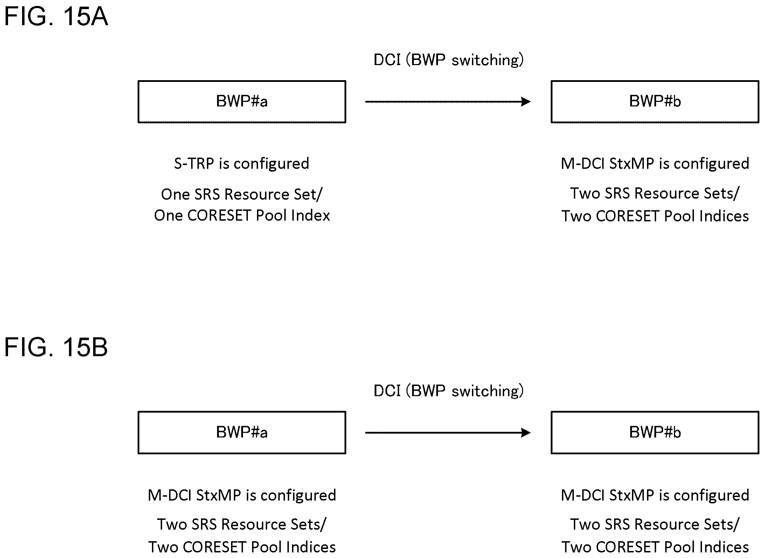

When a single TRP is configured in BWP #a (or the BWP in which DCI is detected) (refer to FIG. 15A), at least one of option 5-1-1 and option 5-1-2 below may be applied. Note that a case where a single TRP is configured in BWP #a (or the BWP in which DCI is detected) may be used interchangeably with a case where one SRS resource set/CORESET pool index is configured in BWP #a (or the BWP in which DCI is detected).

### <<Option 5-1-1>>

A PUSCH to be scheduled may be associated with a specific SRS resource set of BWP #b. The PUSCH may be scheduled by DCI indicating BWP switching (or the DCI detected in BWP #a). The specific SRS resource set may be a first SRS resource set or an SRS resource set having a low index. For example, a UE may assume/judge that the PUSCH to be scheduled is associated with a first SRS resource set of BWP #b.

Note that, in default, the UE may assume/judge that the PUSCH to be scheduled is associated with the specific SRS resource set (for example, the first SRS resource set) of BWP #b. Meanwhile, when there is another indication/condition, an SRS resource set corresponding to the PUSCH may be determined based on the indication/condition.

### <<Option 5-1-2>>

When BWP switching is applied, information related to an SRS resource set associated with a PUSCH to be scheduled may be configured by a higher layer parameter or the like.

### {Option 5-2}

When multi-DCI based simultaneous transmission (for example, M-DCI STxMP PUSCH + PUSCH) is configured in BWP #a (or the BWP in which DCI is detected) (refer to FIG. 15B), at least one of option 5-2-1 to option 5-2-3 below may be applied. Note that a case where multi-DCI based simultaneous transmission (for example, M-DCI STxMP PUSCH + PUSCH) is configured in BWP #a (or the BWP in which DCI is detected) may be used interchangeably with a case where two SRS resource sets/CORESET pool indices are configured in BWP #a (or the BWP in which DCI is detected).

### <<Option 5-2-1>>

A PUSCH to be scheduled may be associated with a specific SRS resource set of BWP #b. The specific SRS resource set may be a first SRS resource set or an SRS resource set having a low index. For example, a UE may assume/judge that the PUSCH to be scheduled is associated with a first SRS resource set of BWP #b.

Note that, in default, the UE may assume/judge that the PUSCH to be scheduled is associated with the specific SRS resource set (for example, the first SRS resource set) of BWP #b. Meanwhile, when there is another indication/condition, an SRS resource set corresponding to the PUSCH may be determined based on the indication/condition.

### <<Option 5-2-2>>

A PUSCH to be scheduled may be associated with an SRS resource set associated with the CORESET pool index corresponding to DCI for scheduling the PUSCH. Association between SRS resource sets and CORESET pool indices may be determined based on a given rule.

For example, association between SRS resource sets and CORESET pool indices may follow a configuration of BWP #b indicated (given rule 1). Alternatively, association between SRS resource sets and CORESET pool indices may follow a configuration of BWP #a (or the BWP in which DCI is detected) (given rule 2). Alternatively, associations between SRS resource sets and CORESET pool indices in BWP #a and BWP #b may be configured to be the same (given rule 3). In given rule 3, a UE may expect/assume/judge that associations between SRS resource sets and CORESET pool indices in BWP #a and BWP #b be the same.

### <<Option 5-2-3>>

When BWP switching is applied, information related to an SRS resource set associated with a PUSCH to be scheduled may be configured by a higher layer parameter or the like.

### {Variations}

When a bandwidth part indication field of DCI detected in BWP #a indicates BWP #b, the same SRS resource set/CORESET pool index may be configured to for BWP #a and BWP #b. When a bandwidth part indication field of DCI detected in BWP #a indicates BWP #b, a UE may expect/assume/judge that the same SRS resource set/CORESET pool index is configured for BWP #a and BWP #b, to judge an SRI field.

### - Case 5-2

For BWP switching, when different BWP #b, which is different from BWP #a, is indicated by a bandwidth part indication field of DCI detected in BWP #a, and a single TRP is configured in BWP #b indicated, at least one of option 5-3 and option 5-4 below may be applied. Note that a case where a single TRP is configured in BWP #b may be used interchangeably with a case where one SRS resource set/CORESET pool index is configured in BWP #b.

### {Option 5-3}

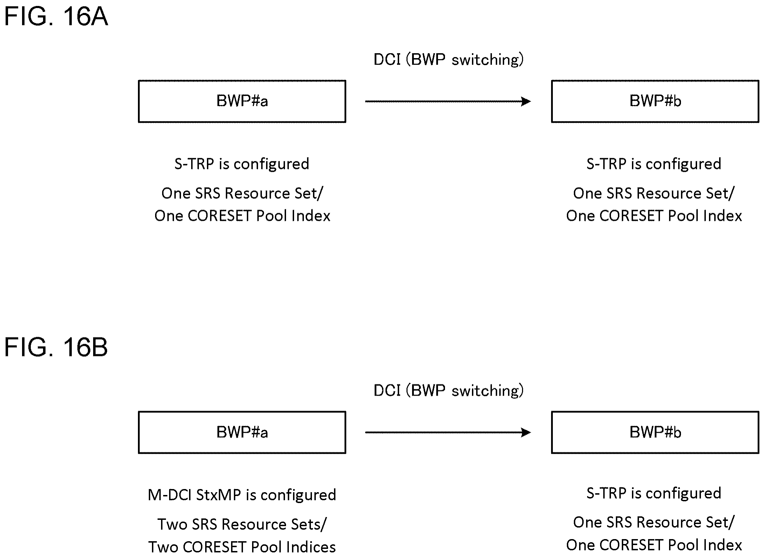

When a single TRP is configured in BWP #a (or the BWP in which DCI is detected) (refer to FIG. 16A), the same operation as that in an existing system (for example, Rel. 17 or previous versions) may be applied. Note that a case where a single TRP is configured in BWP #a (or the BWP in which DCI is detected) may be used interchangeably with a case where one SRS resource set/CORESET pool index is configured in BWP #a (or the BWP in which DCI is detected).

### {Option 5-4}

When multi-DCI based simultaneous transmission (for example, M-DCI STxMP PUSCH + PUSCH) is configured in BWP #a (or the BWP in which DCI is detected) (refer to FIG. 16B), at least one of option 5-4-1 to option 5-4-2 below may be applied. Note that a case where multi-DCI based simultaneous transmission (for example, M-DCI STxMP PUSCH + PUSCH) is configured in BWP #a (or the BWP in which DCI is detected) may be used interchangeably with a case where two SRS resource sets/CORESET pool indices are configured in BWP #a (or the BWP in which DCI is detected).

### <<Option 5-4-1>>

An SRS resource set of BWP #b may be indicated by a specific SRI field in BWP #a. The specific SRI field may be a first SRI field or an SRI field having a low index. For example, a UE may assume/judge that an SRS resource set of BWP #b is indicated by the first SRI field in BWP #a.

Note that the UE may assume/judge that an SRS resource set of BWP #b is indicated by a first SRI field in BWP #a in default. Meanwhile, when there is another indication/condition, an SRS resource set may be determined based on the indication/condition.

### <<Option 5-4-2>>

When BWP switching is applied, information related to the SRS resource set associated with a PUSCH to be scheduled may be configured by a higher layer parameter or the like.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific processing/operation/control/information (for example, simultaneous multi-panel transmission (STxMP) using multiple panels) for at least one of the embodiments above
- supporting of multi-DCI based STxMP
- supporting of making configurations of a size of a given field (for example, an SRI field/TPMI field) separately in multi-DCI based STxMP
- supporting of simultaneous multi-panel in a space multiplexing scheme (STxMP SDM)
- supporting of switching/switch between single-TRP transmission/single-panel transmission and simultaneous multi-panel transmission (STxMP) using multiple panels, and
- supporting of application of different transmission modes (single-TRP transmission/single-panel transmission and simultaneous multi-panel transmission (STxMP) using multiple panels) in BWP switching.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of simultaneous multi-panel transmission (STxMP) using multiple panels, any RRC parameter for a specific release (for example, Rel. 18/19), or the like.

When the UE does not support at least one of the specific UE capabilities above or is not configured with the specific information, operation of Rel. 15/16 may be applied, for example.

### (Supplementary Notes)

Regarding one embodiment of the present disclosure, the following supplementary notes of the invention will be given.

### {Supplementary Note 1-1}

A terminal including: receiving section that receives at least one of first downlink control information (DCI) and second DCI, the first and second DCI being respectively associated with two control resource set pool indices; and a control section that judges, when different parameter configurations are supported for two sounding reference signal (SRS) resource sets respectively associated with the two control resource set pool indices, a size of a given field of the first DCI and a size of a given field of the second DCI, based on a parameter corresponding to the SRS resource set associated with one of the control resource set pool indices or parameters corresponding to the SRS resource sets respectively associated with the two control resource set pool indices.

### {Supplementary Note 1-2}

The terminal according to supplementary note 1-1, wherein the control section judges the size of the given field of the first DCI, based on a first parameter corresponding to an SRS resource set associated with a control resource set pool index of a control resource set for monitoring the first DCI.

### {Supplementary Note 1-3}

The terminal according to supplementary note 1-1 or 1-2, wherein the control section judges the size of the given field of the first DCI, based on a first parameter corresponding to an SRS resource set associated with a control resource set pool index of a control resource set for monitoring the first DCI and a second parameter corresponding to an SRS resource set associated with a control resource set pool index of a control resource set for monitoring the second DCI.

### {Supplementary Note 1-4}

The terminal according to any one of supplementary notes 1-1 to 1-3, wherein, when a first valid bit size determined based on a first parameter corresponding to an SRS resource set associated with a control resource set pool index of a control resource set for monitoring the first DCI is smaller than a second valid bit size determined based on a second parameter corresponding to an SRS resource set associated with a control resource set pool index of a control resource set for monitoring the second DCI, the control section judges that the size of the given field of the first DCI is same as the second valid bit size.

### {Supplementary Note 2-1}

A terminal including: a receiving section that receives information related to a transmission mode when application or switching of a first transmission mode and a second transmission mode is supported; and a control section that judges a size of valid bits of each of the transmission modes in a given field of downlink control information (DCI) for scheduling UL transmission, based on a parameter corresponding to a sounding reference signal (SRS) resource set associated with the transmission mode.

### {Supplementary Note 2-2}

The terminal according to supplementary note 2-1, wherein the control section judges that a largest size of the sizes of the valid bit of the respective transmission modes is a size of the given field.

### {Supplementary Note 2-3}

The terminal according to supplementary note 2-1 or 2-2, wherein, when a size of valid bits of a transmission mode is smaller than a size of the given field, the control section controls the UL transmission, based on interpretation of one or some bits corresponding to the valid bits of the given field.

### {Supplementary Note 2-4}

The terminal according to any one of supplementary notes 2-1 to 2-3, wherein the information related to the transmission mode is indicated by DCI for scheduling the UL transmission.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

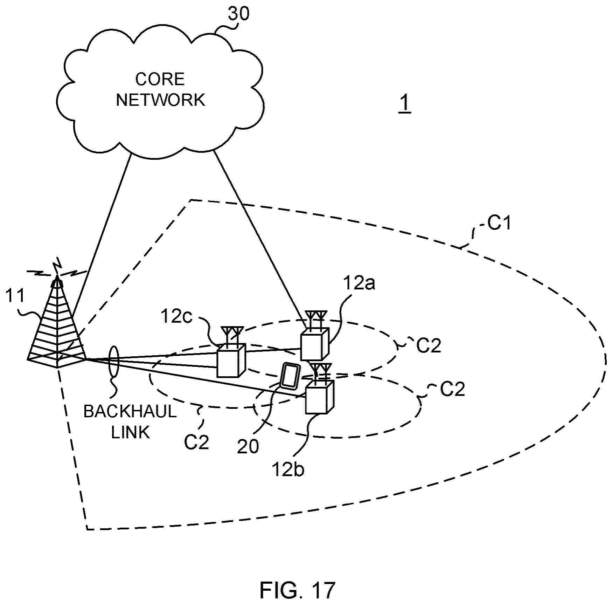

FIG. 17 is a diagram to show an example of a schematic structure of the radio communication system according to one embodiment. A radio communication system 1 (which may be referred to simply as a system 1) may be a system implementing a communication using Long Term Evolution (LTE), 5th generation mobile communication system New Radio (5G NR) and so on the specifications of which have been drafted by the Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UDM), Application Function (AF), Data Network (DN), Location Management Function (LMF), and operation, administration and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be used interchangeably with "DL data," and the PUSCH may be used interchangeably with "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be used interchangeably.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

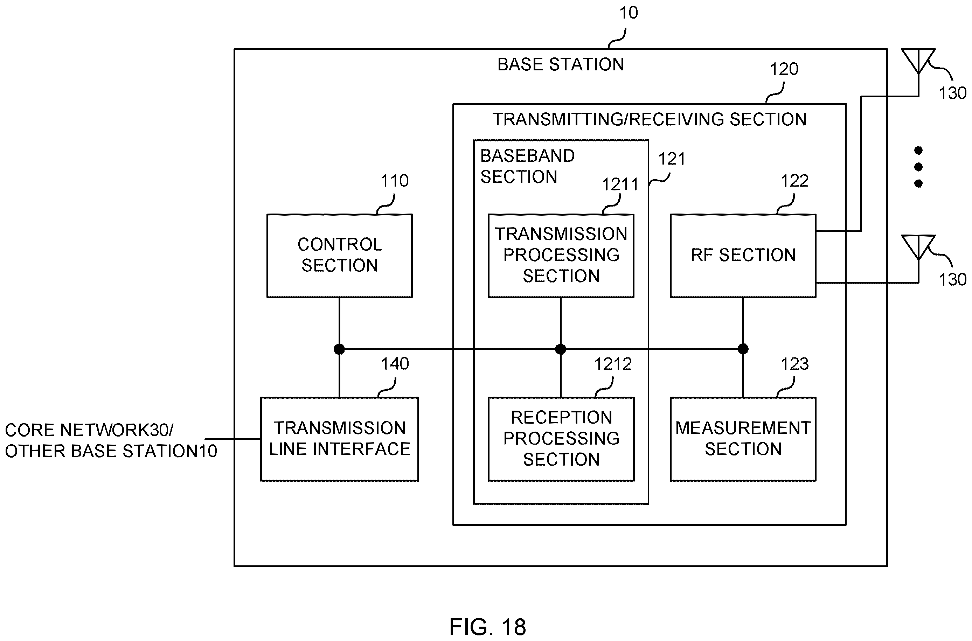

FIG. 18 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus (for example, a network node providing an NF) included in the core network 30 or other base stations 10, and so on, and acquire or transmit user data (user plane data), control plane data, and so on for the user terminal 20, for example.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit at least one of first downlink control information (DCI) and second DCI associated with two respective control resource set pool indices. The control section 110 may control, when different parameter configurations are supported for two respective sounding reference signal (SRS) resource sets associated with the two respective control resource set pool indices, sizes of respective given fields of the first DCI and the second DCI, based on a parameter corresponding to the SRS resource set associated with one of the control resource set pool indices or parameters corresponding to the SRS resource sets associated with the two respective control resource set pool indices.

The transmitting/receiving section 120 may transmit information related to a transmission mode, when application or switching of a first transmission mode and a second transmission mode is supported. The control section 110 may control a size of valid bits of each of the transmission modes in a given field of downlink control information (DCI) for scheduling UL transmission, based on a parameter corresponding to a sounding reference signal (SRS) resource set associated with the transmission mode.

### (User Terminal)

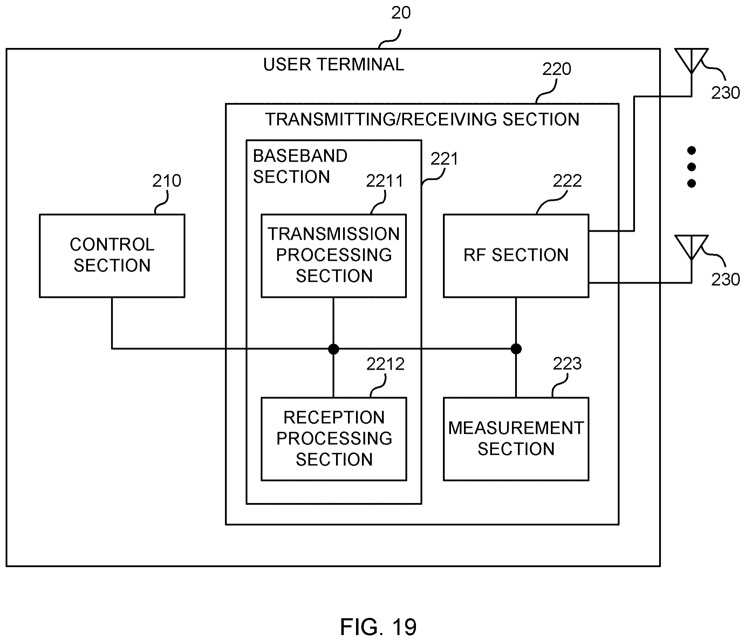

FIG. 19 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI computation, based on a resource for channel measurement. The resource for channel measurement may be a non-zero power (NZP) CSI-RS resource, for example. The measurement section 223 may derive interference measurement for CSI computation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), or CSI-IM and a zero power (ZP) CSI-RS may be used interchangeably. Note that, in the present disclosure, a CSI-RS, an NZP CSI-RS, a ZP CSI-RS, CSI-IM, a CSI-SSB, and the like may be used interchangeably.

Note that the transmitting section and the receiving section of the user terminal 20 in the present disclosure may be constituted with at least one of the transmitting/receiving section 220 and the transmitting/receiving antennas 230.

The transmitting/receiving section 220 may receive at least one of first downlink control information (DCI) and second DCI associated with two respective control resource set pool indices. The control section 210 may judge, when different parameter configurations are supported for two respective sounding reference signal (SRS) resource sets associated with the two respective control resource set pool indices, sizes of respective given fields of the first DCI and the second DCI, based on a parameter corresponding to the SRS resource set associated with one of the control resource set pool indices or parameters corresponding to the SRS resource sets associated with the two respective control resource set pool indices.

The control section 210 may judge the size of the given field of the first DCI, based on a first parameter corresponding to an SRS resource set associated with a control resource set pool index of a control resource set for monitoring the first DCI. Alternatively, the control section 210 may judge the size of the given field of the first DCI, based on a first parameter corresponding to an SRS resource set associated with a control resource set pool index of a control resource set for monitoring the first DCI and a second parameter corresponding to an SRS resource set associated with a control resource set pool index of a control resource set for monitoring the second DCI. Alternatively, when a first valid bit size determined based on a first parameter corresponding to an SRS resource set associated with a control resource set pool index of a control resource set for monitoring the first DCI is smaller than a second valid bit size determined based on a second parameter corresponding to an SRS resource set associated with a control resource set pool index of a control resource set for monitoring the second DCI, the control section 210 may judge that the size of the given field of the first DCI is same as the second valid bit size.

The transmitting/receiving section 220 may receive information related to a transmission mode, when application or switching of a first transmission mode and a second transmission mode is supported. The control section 210 may judge a size of valid bits of each of the transmission modes in a given field of downlink control information (DCI) for scheduling UL transmission, based on a parameter corresponding to a sounding reference signal (SRS) resource set associated with the transmission mode.

The control section 210 may judge that a largest size of the sizes of the valid bit of the respective transmission modes is a size of the given field. Alternatively, when a size of valid bits of a given transmission mode is smaller than a size of the given field, the control section 210 may control the UL transmission, based on interpretation of one or some bits corresponding to the valid bits of the given field. The information related to the transmission mode may be indicated by DCI for scheduling the UL transmission.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

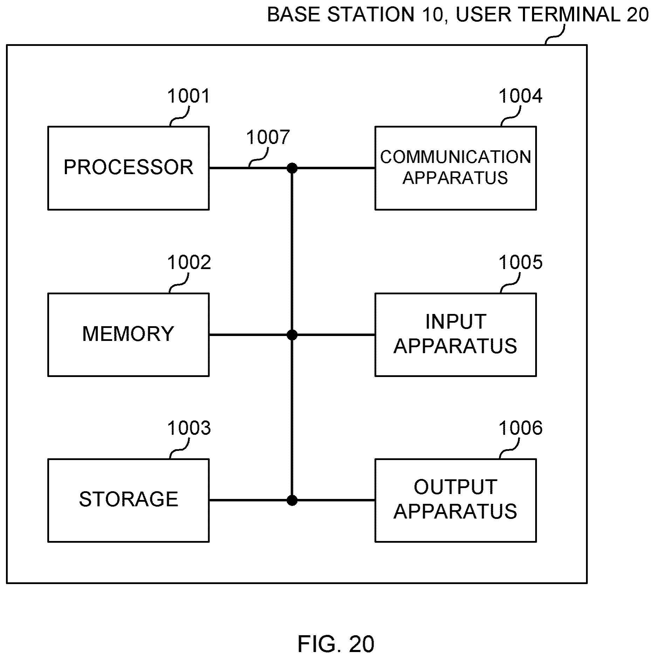

For example, a base station, a user terminal, and so on according to one embodiment of the present disclosure may function as a computer that executes the processes of the radio communication method of the present disclosure. FIG. 20 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus."

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols in number less than the slot. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG)," a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell," a "carrier," and so on in the present disclosure may be used interchangeably with a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software," "firmware," "middleware," "microcode," or "hardware description language," or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," a "layer," "the number of layers," a "rank," a "resource," a "resource set," a "beam," a "beam width," a "beam angular degree," an "antenna," an "antenna element," a "panel," a "UE panel," a "transmission entity," a "reception entity," and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam," an "SRS resource indicator (SRI)," a "CORESET," a "CORESET pool," a "PDSCH," a "PUSCH," a "codeword (CW)," a "transport block (TB)," an "RS," and the like may be interchangeably used.

In the present disclosure, a "TCI state," a "downlink TCI state (DL TCI state)," an "uplink TCI state (UL TCI state)," a "unified TCI state," a "common TCI state," a "joint TCI state," and the like may be used interchangeably.

In the present disclosure, "QCL," "QCL assumption," "QCL relationship," "QCL type information," "QCL property/properties," "specific QCL type (e.g., type A, type D) property," "specific QCL type (e.g., type A, type D)," and the like may be used interchangeably.

In the present disclosure, an "index," an "identifier (ID)," an "indicator," "indication," a "resource ID," and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)," "one or a plurality of spatial relation information," and the like. The TCI state and the TCI may be used interchangeably. The spatial relation information and the spatial relation may be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

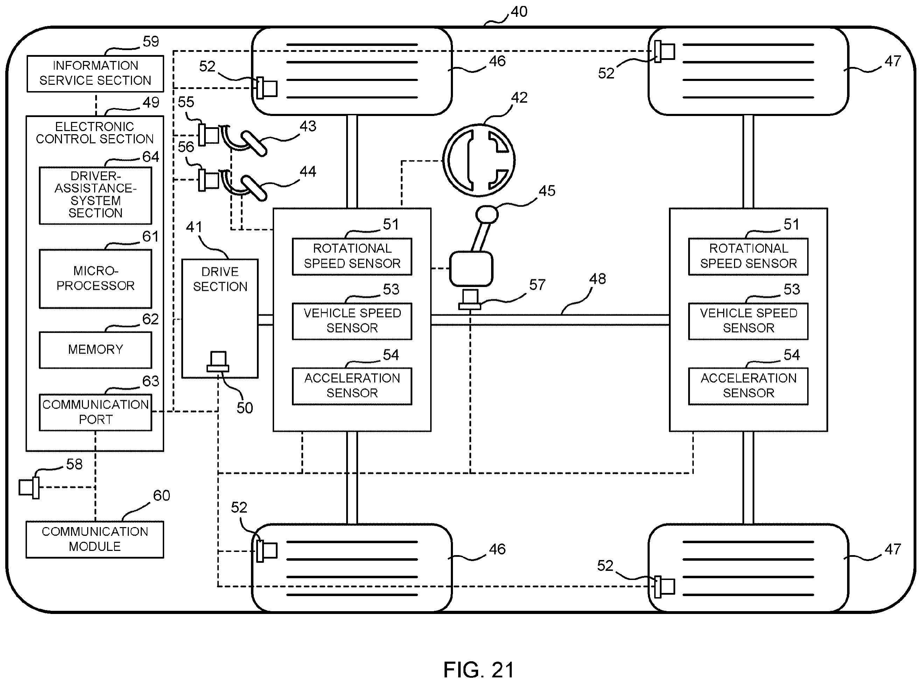

FIG. 21 is a diagram to show an example of a vehicle according to one embodiment. A vehicle 40 includes a drive section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The drive section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driver-assistance-system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driver-assistance-system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the drive section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the drive section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming," "expect/expecting," "consider/considering," and the like. Note that, in the present disclosure, "not expect to" may be used interchangeably with "expect not to."

In the present disclosure, "expect" may be used interchangeably with "be expected." For example, "expect(s) ..." (.".." may be expressed using, for example, a that-clause, a to-infinitive, or the like) may be used interchangeably with "be expected ...." "Does not expect ..." may be used interchangeably with "be not expected ...." Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected," "coupled," or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." It should be noted that the phrase may mean that "A and B are each different from C." The terms "separate," "coupled," and so on may be interpreted similarly to "different."

In the case where the terms "include," "including," and variations thereof are used in the present disclosure, these terms are intended to be comprehensive, in a manner similar to the term "comprising." Furthermore, the term "or" used in the present disclosure is not intended to be an "exclusive or."

For example, in the present disclosure, where an article such as "a," "an," and "the" is added by translation, the present disclosure may include that a noun after the article is in a plural form.

In the present disclosure, "equal to or less than," "less than," "equal to or more than," "more than," "equal to," and the like may be used interchangeably. In the present disclosure, words such as "good," "bad," "large," "small," "high," "low," "early," "late," "wide," "narrow," and the like may be used interchangeably irrespective of positive degree, comparative degree, and superlative degree. In the present disclosure, expressions obtained by adding "i-th" (i is any integer) to words such as "good," "bad," "large," "small," "high," "low," "early," "late," "wide," "narrow," and the like may be used interchangeably irrespective of positive degree, comparative degree, and superlative degree (for example, "best" may be used interchangeably with "i-th best," and vice versa).

In the present disclosure, "of," "for," "regarding," "related to," "associated with," and the like may be used interchangeably.

In the present disclosure, "when A, B," "if A, (then) B," "B upon A," "B in response to A," "B based on A," "B during/while A," "B before A," "B (at the same time as)/on A," "B after A," "B since A," "B until A," and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs." The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

This application is based on and claims priority to Japanese Patent Application No. 2023-028440, filed on February 27, 2023, the contents of which are incorporated herein by reference in their entirety.

## Claims

1. A terminal comprising:
a receiving section that receives information related to a transmission mode when application or switching of a first transmission mode and a second transmission mode is supported; and
a control section that judges a size of valid bits of each of the transmission modes in a given field of downlink control information (DCI) for scheduling UL transmission, based on a parameter corresponding to a sounding reference signal (SRS) resource set associated with the transmission mode.

2. The terminal according to claim 1, wherein
the control section judges that a largest size of the sizes of the valid bits of the respective transmission modes is a size of the given field.

3. The terminal according to claim 1, wherein
when a size of valid bits of a transmission mode is smaller than a size of the given field, the control section controls the UL transmission, based on interpretation of one or some bits corresponding to the valid bits of the given field.

4. The terminal according to claim 1, wherein
the information related to the transmission mode is indicated by DCI for scheduling the UL transmission.

5. A radio communication method for a terminal, the radio communication method comprising:
receiving information related to a transmission mode when application or switching of a first transmission mode and a second transmission mode is supported; and
judging a size of valid bits of each of the transmission modes in a given field of downlink control information (DCI) for scheduling UL transmission, based on a parameter corresponding to a sounding reference signal (SRS) resource set associated with the transmission mode.

6. A base station comprising:
a transmitting section that transmits information related to a transmission mode when application or switching of a first transmission mode and a second transmission mode is supported; and
a control section that controls a size of valid bits of each of the transmission modes in a given field of downlink control information (DCI) for scheduling UL transmission, based on a parameter corresponding to a sounding reference signal (SRS) resource set associated with the transmission mode.
